# EUROPEAN PATENT APPLICATION

(11) **EP 4 770 156 A1**
(43) Date of publication of application: **01.07.2026**
(21) Application number: 24870402.5
(22) Date of filing: 06.09.2024
(51) Int. Cl.: H04W 12/08

(54) **COMMUNICATION METHOD, APPARATUS AND SYSTEM**

(30) Priority: 26.09.2023 CN 202311256285
(71) Applicant: Huawei Technologies Co., Ltd., Shenzhen, Guangdong 518129 (CN)
(72) Inventor: DING, Hui, Shenzhen, Guangdong 518129 (CN); ZONG, Zaifeng, Shenzhen, Guangdong 518129 (CN); XIA, Linjin, Shenzhen, Guangdong 518129 (CN); YIN, Yu, Shenzhen, Guangdong 518129 (CN)
(74) Representative: Isarpatent
(86) International application number: PCT/CN2024/117363
(87) International publication number: WO 2025/066856

(57) **Abstract**

This application provides a communication method, apparatus, and system. The method includes: A first network element in a first network receives a first request message from a terminal device, determines access policy information of a second network based on the first request message and subscription information of the second network, and sends the access policy information to a control plane network element in the first network. The first request message is used to request to access the second network, the access policy information indicates a policy used by the terminal device to access, in a first region, the second network through the first network, and the first network and the second network support providing a service for a terminal device in the first region. In solutions of this application, the terminal device is supported in effectively accessing the second network through the first network, to obtain a service.

## Description

This application claims priority to Chinese Patent Application No. 202311256285.0, filed with the China National Intellectual Property Administration on September 26, 2023 and entitled "COMMUNICATION METHOD, APPARATUS, AND SYSTEM", which is incorporated herein by reference in its entirety.

### TECHNICAL FIELD

This application relates to the communication field, and more specifically, to a communication method, apparatus, and system.

### BACKGROUND

Technologies such as multi-access edge computing (multi-access edge computing, MEC) and slicing are introduced into a 5th generation (5th generation, 5G) mobile communication network, and are used to deploy networks in regions such as campuses, factories, and museums, to provide customized services for users in the regions. In this way, a 3rd generation partnership project (3rd generation partnership project, 3GPP) mobile network is promoted from to consumer (to consumer, 2C) to to business (to business, to B or 2B), to expand a market of the 3GPP mobile network. A network that provides customized services for users in a specified region may be referred to as a subnet.

However, when an operator deploys the subnet by using technologies such as slicing, MEC, or local area data network (local area data network, LADN), only a subscriber of the operator can access the subnet, while a user of another operator cannot access the subnet. In addition, the subnet cannot independently control permission for accessing the subnet by the user. This makes deployment and maintenance of the subnet complex, and limits development of a subnet scenario. The operator may alternatively deploy the subnet by using a standalone non-public network (standalone non-public network, SNPN) technology. However, the SNPN technology supports only access of a subnet dedicated terminal, and is applicable to limited scenarios.

### SUMMARY

This application provides a communication method, apparatus, and system, so that a terminal device can access a subnet and obtain a service provided by the subnet.

According to a first aspect, a communication method is provided. The method may be performed by a first network element, or may be performed by a chip or a circuit of the first network element. This is not limited in this application. For ease of description, the following provides descriptions by using an example in which the method is performed by the first network element.

The method includes: receiving a first request message from a terminal device, where the first request message is used to request to access a second network; determining access policy information of the second network based on the first request message and subscription information of the second network, where the access policy information indicates a policy used by the terminal device to access, in a first region, the second network through the first network, and the first network and the second network support providing a service for a terminal device in the first region; and sending the access policy information to a control plane network element in the first network.

In this application, the first network may be referred to as a large network, and may be understood as a mobile operator network. The second network may be referred to as a subnet, and is maintained by a subnet operator. The first network and the second network may be operated by a same operator, or may be operated by different operators.

It should be understood that, the first network element is a network element in the first network, and the first network element may be a large network data node or a region database (region database, region DB), for example, a policy control function (policy control function, PCF) or a unified data management (unified data management, UDM) function. The region database may also be referred to as a region data node. The control plane network element may be an access and mobility management function (access and mobility management function, AMF) network element or a session management function (session management function, SMF) network element.

For example, the first request message includes an identifier of the terminal device and an identifier of the second network. The method further includes: determining, based on the identifier of the terminal device, that the terminal device requests to access the second network. Optionally, if the subscription information of the second network includes the identifier of the terminal device, it may be determined that the terminal device subscribes to the second network, and then an access service may be provided for the terminal device.

For example, the first request message includes the identifier of the second network. The method further includes: determining, based on the identifier of the second network, that the terminal device requests to access the second network.

For example, the first request message includes information indicating a first service in the second network, for example, an identifier of the first service. The method further includes: determining, based on the information indicating the first service in the second network and a mapping relationship, that the terminal device requests to access the second network, where the mapping relationship represents a mapping relationship between the first service and the second network.

In this application, the first service may be referred to as a campus service, a region service, a private network service, a dedicated network service, a first-type service, or the like. The first service may be a service 2B or 2C, that is, a customized service that the terminal device subscribes to in a specified location region. The specified location region may be referred to as the first region. That is, the first service is accessible by the terminal device in the first region. Alternatively, when the terminal device is located in the first region, the terminal device can access the first service. Alternatively, the first service is a service accessed by the terminal device in the first region. "Access" may also be understood as "visit". The first region may be an enterprise campus, a scenic spot (for example, a park, a museum, or a theater), a school, or a shopping mall.

For example, the subscription information of the second network may include service subscription information at a user granularity or service subscription information at a network granularity. The service subscription information at the user granularity or the service subscription information at the network granularity may include one or more of the following: a list of accessible services, service assurance subscription information, a service range of the second network, information about a terminal device authorized to access a subnet service, network information corresponding to the subnet service, and the like. The list of accessible services includes information about one or more subnet services, and the one or more subnet services may be accessible by the terminal device, that is, the terminal device may request the one or more subnet services from the second network. For example, if a terminal device is used as a granularity, for each terminal device, a list of accessible services indicates at least one subnet service that is accessible by the terminal device. The service assurance subscription information may include information such as a bandwidth, a scheduling priority, and a delay. The service range of the second network may include information such as a service region, a service type, a service object, and a service name provided by the subnet. For example, the second network supports providing a session establishment service for a subscribed terminal device. The information about the terminal device authorized to access the subnet service may be understood as information about a terminal device that has subscribed to the subnet service, for example, the identifier of the terminal device. The network information corresponding to the subnet service may be a data network name (data network name, DNN) and/or a single network slice selection assistance information (single network slice selection assistance information, S-NSSAI) list, or the like.

For example, the access policy information of the second network may include one or more of the following: a list of services that the terminal device is authorized to access, an access range of the authorized terminal device, or service assurance policy information. A home network element may be a network element in a region in which subscription data of the terminal device is located, for example, a node that is in a home location of a user and that is responsible for maintaining user data, for example, a UDM or a PCF in a home network. The list of services that the terminal device is authorized to access may include information about one or more subnet services, and the one or more subnet services may be accessible by the terminal device, that is, the second network may provide the one or more subnet services for the terminal device. The access range of the authorized terminal device may include policy information for the terminal device to access a specific subnet service, for example, a specific DNN and/or specific S-NSSAI that need/needs to be used to access the subnet service. The service assurance policy information is service assurance policy information at a granularity of a terminal device/subnet service/subnet, for example, QoS assurance that needs to be provided for a service, and may include a packet loss rate, a delay, a bandwidth, a scheduling priority, and the like.

According to the solution provided in this application, the first network element makes an access policy decision based on the received first request message and the obtained subscription information of the second network, and may obtain the access policy information of the second network, that is, a policy used by the terminal device to access the second network or the service in the second network. Further, the control plane network element (for example, an AMF) in the first network may complete registration of the terminal device based on the access policy information, so that the terminal device accesses the second network or the service in the second network. Alternatively, the control plane network element (for example, an SMF) in the first network may establish a session, for example, a protocol data unit (protocol data unit, PDU) session, for the terminal device based on the access policy information, and perform transmission of the subnet service based on the PDU session, so that the terminal device can access the second network through the first network, and obtain the service provided by the second network.

With reference to the first aspect, in some implementations of the first aspect, before the determining the access policy information of the second network based on the first request message and the subscription information of the second network, the method further includes: obtaining the subscription information of the second network.

With reference to the first aspect, in some implementations of the first aspect, the obtaining the subscription information of the second network includes: sending a second request message to a second network element in the second network, where the second request message is used to request to obtain the subscription information of the second network; and receiving the subscription information from the second network element.

For example, the second request message includes the identifier of the second network and/or the identifier of the terminal device.

For example, the second network element may be a subnet data node or a subnet database, for example, a PCF or a UDM. The subnet database may also be referred to as a subnet data node, and is referred to as a subnet DB for short.

Optionally, the obtaining the subscription information of the second network further includes: obtaining the subscription information of the second network from a third network element, where the third network element is configured to support information exchange between a network element in the first network and a network element in the second network. The third network element may be a cross-network data node (for example, a cross-network DB), and the cross-network data node may be provided by a cross-network operator. In other words, the cross-network data node may be provided by a third-party operator other than a large network operator and a subnet operator, for example, an indirect interaction platform that is between a large network and a subnet and that is provided by the third-party operator.

According to the foregoing solution, a message for requesting to obtain the subscription information of the second network is sent to the second network element, to obtain the subscription information of the second network. Further, with reference to the first request message from the terminal device, it may be determined whether the terminal device needs to access the second network in the first region through the first network, that is, whether to guide the terminal device to access the second network or the service provided by the second network. It should be understood that, based on the obtained subscription information of the second network and the first request message from the terminal device, the first network element may determine whether the terminal device needs to access the second network in the first region through the first network, that is, determine whether the terminal device needs to be guided to access the second network or the service provided by the second network.

With reference to the first aspect, in some implementations of the first aspect, before the sending the second request message to the second network element in the second network, the method further includes: obtaining routing information of the second network element; and the sending the second request message to the second network element in the second network includes: sending the second request message to the second network element in the second network based on the routing information of the second network element.

For example, the routing information of the second network element may be device routing information of a control plane or a data plane, a list of provided services, or the like of the second network. The device routing information may include information such as an internet protocol (internet protocol, IP) address, a fully qualified domain name (fully qualified domain name, FQDN), and a host name of the second network element. This is not limited in this application.

According to the foregoing solution, by obtaining the routing information of the second network element, the second request message used to obtain the subscription information of the second network may be sent to the second network element based on the routing information of the second network element. This facilitates the first network element to subsequently execute the access policy decision based on the subscription information of the second network and the first request message, so that the terminal device accesses the second network, and further obtains the service provided by the second network.

With reference to the first aspect, in some implementations of the first aspect, the obtaining the routing information of the second network element includes: sending a third request message to the third network element, where the third request message is used to request to obtain the routing information of the second network element; and receiving the routing information of the second network element from the third network element, where the third network element is configured to support information exchange between a network element in the first network and a network element in the second network.

For example, the third network element may be a cross-network data node, and the node may be provided by a cross-network operator. In other words, the cross-network data node may be provided by a third-party operator other than a large network operator and a subnet operator, for example, an indirect interaction platform that is between a large network and a subnet and that is provided by the third-party operator. The third network element may also be referred to as a cross-network data node or a cross-network DB. In embodiments of this application, a specific form of the third network element may be a cross-operator service registration network element (similar to an NRF in a 5G network), or may be a cross-operator topology management node (similar to operations, administration, and maintenance (operations, administration, and maintenance, OAM) in an operator network). This is not limited in this application.

According to the foregoing solution, the third network element is introduced to obtain the routing information of the second network element. This may support providing a capability of a communication connection between the second network and one or more operators, and reduce complexity of communication connections between the second network and a plurality of operators in a deployment process of the second network.

With reference to the first aspect, in some implementations of the first aspect, the obtaining the routing information of the second network element includes: receiving the routing information of the second network element from the second network element.

For example, the routing information may be carried in service information sent by the second network element. Optionally, the routing information and the service information may be sent simultaneously, or may be sent separately, or may be carried in a same message (for example, the service information) for sending, or may be carried in different messages for sending. This is not limited in this application.

According to the foregoing solution, by obtaining the routing information of the second network element, the second request message used to obtain the subscription information of the second network may be sent to the second network element based on the routing information of the second network element. This facilitates the first network element to subsequently execute the access policy decision based on the subscription information of the second network and the first request message, so that the terminal device accesses the second network, and further obtains the service provided by the second network.

With reference to the first aspect, in some implementations of the first aspect, the subscription information of the second network includes the service range of the second network, and before the determining the access policy information of the second network based on the first request message and the subscription information of the second network, the method further includes: obtaining information indicating a location of the terminal device; and when the service range of the second network includes the location of the terminal device, determining to allow the terminal device to access the second network.

For example, the obtaining the information indicating the location of the terminal device includes: The first network element obtains the location information of the terminal device from the terminal device; or the first network element stores the location information of the terminal device when the terminal device camps on the first network and initiates a procedure of registering with the first network. The information indicating the location of the terminal device may be a physical address of the terminal device, an IP address of the terminal device, or the like.

According to the foregoing solution, the first network element determines, based on that the location information of the terminal device is within the service range of the second network, to allow the terminal device to access the second network, and further determines a policy used by the terminal device to access the second network or the service in the second network through the first network. This can ensure that the terminal device effectively accesses the second network or the service in the second network.

With reference to the first aspect, in some implementations of the first aspect, the access policy information of the second network includes first resource indication information, the first resource indication information indicates a resource that is in the first network and that is used by the terminal device to access the second network through the first network, and the method further includes: obtaining second resource indication information, where the second resource indication information indicates a resource that the first network authorizes the terminal device to use; and determining the first resource indication information based on the second resource indication information.

For example, the resource that the first network authorizes the terminal device to use may be understood as a resource that is in the first network and that can be used by the terminal device when accessing the second network or the service in the second network through the first network. For example, the resource that the first network authorizes the terminal device to use may include a resource at a user granularity or a resource at a subnet granularity, for example, information such as a guaranteed bandwidth range that can be provided and is authorized by the first network, a user account balance, a package balance, remaining traffic, and the like authorized by the first network for use, and a DNN and/or an S-NSSAI list authorized by the first network for access.

For example, if the first network includes a network element configured to store a resource that is in the first network and that is used by the terminal device, for example, a PCF or a UDM, the first network element may obtain the second resource indication information from the PCF or the UDM. Further, that the first network element determines the access policy information of the second network based on the first request message and the subscription information of the second network may include: The first network element determines the access policy information of the second network based on the first request message, the subscription information of the second network, and the second resource indication information. The access policy information of the second network includes the first resource indication information, that is, the resource that is in the first network and that is used by the terminal device to subsequently access the second network through the first network. For example, the second resource indication information indicates that the first network authorizes the terminal device to access the second network by using a DNN #1 and/or a DNN #2 provided by the first network, and the first resource indication information indicates that after executing the policy decision, the first network element determines to authorize the terminal device to access the second network by using the DNN #1.

According to the foregoing solution, a resource used by the first network to authorize the terminal device to access the second network through the first network is newly added to input information used by the first network element to execute the access policy decision, to ensure that the terminal device can effectively access the second network through the first network, and obtain the service provided by the second network, avoiding a case in which the terminal device cannot successfully access the second network due to insufficient resources allowed by the first network for use.

With reference to the first aspect, in some implementations of the first aspect, before the sending the second request message to the second network element in the second network, the method further includes: obtaining service information of the second network element, where the service information indicates a service supported by the second network element; and determining, based on the service information and the first request message, to allow the terminal device to access the second network.

For example, the service information includes one or more of the following: information about a list of users for which the second network element supports providing a service, information about a list of user groups for which the second network element supports providing a service, the identifier of the second network, open access indication information, or an identifier of a subnet service supported by the second network element. Information about a user for which the second network element supports providing a service includes an identifier, for example, a UE ID, of one or more terminal devices, that is, the one or more terminal devices may request a service from the second network element. Information about a user group for which the second network element supports providing a service may be one or more pieces of user group information. The user group information may be understood as a user group identifier. Each user group identifier includes one or more user identifiers, that is, the second network element supports one or more user access services.

According to the foregoing solution, the first network element first needs to determine, based on an access request of the terminal device and service information of the second network, whether to guide the terminal device to access the second network. For example, if the information about a list of users for which the second network element supports providing a service includes the identifier of the terminal device, and the terminal device requests to access the second network, the first network element may determine that the terminal device can access the second network, and then execute a subsequent access policy decision, to obtain policy decision information or a policy decision result for the terminal device to access the second network. This facilitates the terminal device to effectively access the second network or a subnet service provided by the second network, to ensure quality of user experience.

With reference to the first aspect, in some implementations of the first aspect, the obtaining the service information of the second network element includes: receiving the service information of the second network element from the second network element; receiving the service information of the second network element from the home network element, where the home network element is a network element in the home network of the terminal device; or receiving the service information of the second network element from the third network element, where the third network element is configured to support information exchange between a network element in the first network and a network element in the second network.

According to the foregoing solution, the first network element may obtain the service information of the second network element from the second network element, the third network element, or the home network element, so that diversity and flexibility of obtaining the service information of the second network element can be implemented. An implementation of obtaining the service information of the second network element is not limited in this application.

With reference to the first aspect, in some implementations of the first aspect, the determining, based on the service information and the first request message, to allow the terminal device to access the second network includes: when the service information and the first request message meet one or more of the following conditions, determining to allow the terminal device to access the second network: the first request message includes information indicating the location of the terminal device, the service information includes the service range of the second network, and the service range of the second network includes the location of the terminal device; the first request message includes information identifying the first service in the second network, and the service information indicates that the terminal device is allowed to access the first service; the first request message includes information identifying the second network, and the service information indicates that the terminal device is allowed to access the second network; or the service information indicates that the second network allows a terminal device that does not subscribe to the second network to access the second network.

According to the foregoing solution, the first network element may determine, based on the first request message of the terminal device and the service information of the second network, whether the terminal device can access the second network, to provide assurance for the terminal device to subsequently access the second network or obtain the service provided by the second network. This avoids impact such as a waste of signaling overheads or poor user experience caused by access of the terminal device when the second network does not support access of the terminal device or the second network is overloaded.

According to a second aspect, a communication method is provided. The method may be performed by a second network element, or may be performed by a chip or a circuit of the second network element. This is not limited in this application. For ease of description, the following provides descriptions by using an example in which the method is performed by the second network element.

The method includes: receiving a request message from a first network element in a first network, where the request message is used to request to obtain subscription information of a second network, the first network and the second network support providing a service for a terminal device in a first region, and the first region is a region in which the terminal device requests to access the second network through the first network; and sending the subscription information to the first network element based on the request message.

According to the solution provided in this application, the second network element sends the subscription information of the second network to the first network element based on the request message. This facilitates the first network element to subsequently make an access policy decision based on the received request message used to access the second network and the subscription information of the second network, to obtain access policy information of the second network, that is, a decision used by the terminal device to access the second network or a service in the second network, so that the terminal device can access the second network through the first network, and obtain the service provided by the second network.

With reference to the second aspect, in some implementations of the second aspect, before the receiving the request message from the first network element in the first network, the method further includes: sending service information of the second network element to the first network element or a third network element, where the service information indicates a service supported by the second network element.

With reference to the second aspect, in some implementations of the second aspect, the sending the service information of the second network element to the first network element includes: sending the service information of the second network element to the first network element via the third network element, where the third network element is configured to support information exchange between a network element in the first network and a network element in the second network.

With reference to the second aspect, in some implementations of the second aspect, before the receiving the request message from the first network element in the first network, the method further includes: receiving a query message, where the query message is used to query routing information of the second network element; and sending the routing information of the second network element to the first network element or the third network element.

For beneficial effects of the second aspect and some implementations of the second aspect, correspondingly refer to related descriptions of the first aspect. Details are not described herein again.

According to a third aspect, a communication method is provided. The method may be performed by a second network element, or may be performed by a chip or a circuit of the second network element. This is not limited in this application. For ease of description, the following provides descriptions by using an example in which the method is performed by the second network element.

The method includes: receiving a request message from a control plane network element in a first network, where the request message is used to request to obtain access policy information of a second network, or is used to request to enable a terminal device to access the second network; determining the access policy information of the second network based on the request message and subscription information of the second network, where the first network and the second network support providing a service for a terminal device in a first region, and the access policy information indicates a policy used by the terminal device in the first region to access the second network through the first network; and sending the access policy information of the second network to the control plane network element.

According to the solution provided in this application, the second network element makes an access policy decision based on the received request message and the subscription information of the second network, and may obtain the access policy information of the second network, that is, a policy used by the terminal device to access the second network or a service in the second network. Further, the terminal device may access the second network or the service in the second network according to the policy.

With reference to the third aspect, in some implementations of the third aspect, before the determining the access policy information of the second network based on the request message and the subscription information of the second network, the method further includes: obtaining the subscription information of the second network.

For example, the request message includes one or more of the following: an identifier of the second network, an identifier of the terminal device, location information of the terminal device, or second resource indication information, where the second resource indication information indicates a resource that the first network authorizes the terminal device to use.

With reference to the third aspect, in some implementations of the third aspect, the access policy information of the second network includes first resource indication information, the first resource indication information indicates a resource that is in the first network and that is used by the terminal device to access the second network through the first network, and the method further includes: obtaining the second resource indication information, where the second resource indication information indicates the resource that the first network authorizes the terminal device to use; and determining the first resource indication information based on the second resource indication information.

For example, if the first network includes a network element configured to store a resource that is in the first network and that is used by the terminal device, for example, a PCF or a UDM, the second network element may directly or indirectly obtain the second resource indication information from the PCF or the UDM. Further, that the second network element determines the access policy information of the second network based on the request message and the subscription information of the second network may include: The second network element determines the access policy information of the second network based on the request message, the subscription information of the second network, and the second resource indication information. The access policy information of the second network includes the first resource indication information, that is, the resource that is in the first network and that is used by the terminal device to subsequently access the second network through the first network. For example, the second resource indication information indicates that the first network authorizes the terminal device to access the second network by using S-NSSAI #1 and S-NSSAI #2 provided by the first network, and the first resource indication information indicates that after executing the policy decision, a first network element determines to authorize the terminal device to access the second network by using the S-NSSAI #2.

With reference to the third aspect, in some implementations of the third aspect, before the receiving the first request message from the control plane network element in the first network, the method further includes: sending service information of the second network element to the first network element or a home network element, where the service information indicates a service supported by the second network element, the first network element is a network element in the first network, and the home network element is a network element in a home network of the terminal device.

For example, the service information of the second network element is sent to the first network element or the home network element via a third network element.

For beneficial effects of the third aspect and some implementations of the third aspect, correspondingly refer to related descriptions of the first aspect. Details are not described herein again.

According to a fourth aspect, a communication method is provided. The method may be performed by a first network element, or may be performed by a chip or a circuit of the first network element. This is not limited in this application. For ease of description, the following provides descriptions by using an example in which the method is performed by the first network element.

The method includes: obtaining service information of a second network element in a second network, where the service information indicates a service supported by the second network element, and a first network and the second network support providing a service for a terminal device in a first region; receiving, from the terminal device, a message used to request to access the second network; determining, based on the message used to request to access the second network and the service information, to allow the terminal device to access the second network; and sending, to a control plane network element in the first network, a message indicating the control plane network element to establish a communication connection to the second network element.

For example, the message indicating the control plane network element to establish the communication connection to the second network element may be redirection indication information, and may include an identifier of the second network or an identifier of the second network element. Therefore, the control plane network element triggers to send a request message to the second network element based on the message, where the request message is used to request to obtain access policy information of the second network, or is used to request to enable the terminal device to access the second network.

According to the solution provided in this application, the first network element determines, based on the obtained service information of the second network element and the message used to request to access the second network, that the terminal device is allowed to access the second network, that is, determines whether to guide the terminal device to access the second network, and triggers the second network element to execute an access policy decision, to obtain the access policy information of the second network, that is, a policy used by the terminal device to access the second network or a service in the second network, so that the terminal device can access the second network according to the policy, and obtain a service provided by the second network.

With reference to the fourth aspect, in some implementations of the fourth aspect, the obtaining the service information of the second network element includes: receiving the service information of the second network element from the second network element; receiving the service information of the second network element from a home network element, where the home network element is a network element in a home network of the terminal device; or receiving the service information of the second network element from a third network element.

For beneficial effects of the fourth aspect and some implementations of the fourth aspect, correspondingly refer to related descriptions of the third aspect. Details are not described herein again.

According to a fifth aspect, a communication apparatus is provided. The apparatus includes: a transceiver unit, configured to receive a first request message from a terminal device, where the first request message is used to request to access a second network; and a processing unit, configured to: determine access policy information of the second network based on the first request message and subscription information of the second network, where the access policy information indicates a policy used by the terminal device to access, in a first region, the second network through the first network, and the first network and the second network support providing a service for a terminal device in the first region; and send the access policy information to a control plane network element in the first network.

The transceiver unit may perform receiving and sending in the first aspect, and the processing unit may perform processing other than the receiving and sending in the first aspect.

According to a sixth aspect, a communication apparatus is provided. The apparatus includes: a transceiver unit, configured to receive a request message from a first network element in a first network, where the request message is used to request to obtain subscription information of a second network, the first network and the second network support providing a service for a terminal device in a first region, and the first region is a region in which the terminal device requests to access the second network through the first network. The transceiver unit is further configured to send the subscription information to the first network element based on the request message.

The transceiver unit may perform receiving and sending in the second aspect, and a processing unit of the communication apparatus may perform processing other than the receiving and sending in the second aspect.

According to a seventh aspect, a communication apparatus is provided. The apparatus includes: a transceiver unit, configured to receive a request message from a control plane network element in a first network, where the request message is used to request to obtain access policy information of a second network, or is used to request to enable a terminal device to access the second network, the access policy information indicates a policy used by the terminal device to access, in a first region, the second network through the first network, and the first network and the second network support providing a service for a terminal device in the first region; and a processing unit, configured to: determine the access policy information of the second network based on the request message and subscription information of the second network; and send the access policy information of the second network to the control plane network element. The transceiver unit is further configured to send the access policy information of the second network to the control plane network element.

The transceiver unit may perform receiving and sending in the third aspect, and the processing unit may perform processing other than the receiving and sending in the third aspect.

According to an eighth aspect, a communication apparatus is provided. The apparatus includes: a transceiver unit, configured to obtain service information of a second network element in a second network, where the service information indicates a service supported by the second network element, and a first network and the second network support providing a service for a terminal device in a first region; and the transceiver unit is further configured to receive a first request message from the terminal device, where the first request message is used to request to access the second network in the first region through the first network; and a processing unit, configured to determine, based on the first request message and the service information, to allow the terminal device to access the second network. The transceiver unit is further configured to send, to a control plane network element in the first network, a message indicating the control plane network element to establish a communication connection to the second network element.

The transceiver unit may perform receiving and sending in the fourth aspect, and the processing unit of the communication apparatus may perform processing other than the receiving and sending in the fourth aspect.

According to a ninth aspect, a communication apparatus is provided, including a processor. The processor is coupled to a memory, the memory is configured to store a computer program, and the processor is configured to invoke the computer program from the memory and run the computer program, to enable the apparatus to perform the method according to any one of the first aspect to the fourth aspect and the possible implementations of the first aspect to the fourth aspect.

Optionally, there are one or more processors, and there are one or more memories.

Optionally, the memory may be integrated with the processor, or the memory and the processor are separately disposed.

According to a tenth aspect, a communication system is provided, including a first network element and a second network element. The first network element is configured to perform the method according to any one of the first aspect or the fourth aspect and the possible implementations of the first aspect or the fourth aspect, and the second network element is configured to perform the method according to any one of the second aspect or the third aspect and the possible implementations of the second aspect or the third aspect.

Optionally, the communication system further includes a control plane network element. The control plane network element may be a control plane network element in a first network or a control plane network element in a second network.

Optionally, the communication system further includes a terminal device.

According to an eleventh aspect, a computer-readable storage medium is provided. The computer-readable storage medium stores a computer program or code. When the computer program or code is run on a computer, the computer is enabled to perform the method according to any one of the first aspect to the fourth aspect and the possible implementations of the first aspect to the fourth aspect.

According to a twelfth aspect, a chip is provided, including at least one processor. The at least one processor is coupled to a memory. The memory is configured to store a computer program. The processor is configured to invoke the computer program from the memory and run the computer program, to enable an apparatus in which the chip system is installed to perform the method according to any one of the first aspect to the fourth aspect and the possible implementations of the first aspect to the fourth aspect.

The chip may include an input circuit or interface configured to send information or data, and an output circuit or interface configured to receive information or data.

According to a thirteenth aspect, a computer program product is provided. The computer program product includes computer program code. When the computer program code is run on a computer, the method according to any one of the first aspect to the fourth aspect and the possible implementations of the first aspect to the fourth aspect is performed.

### BRIEF DESCRIPTION OF DRAWINGS

FIG. 1 to FIG. 4 are diagrams of network architectures applicable to embodiments of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a diagram of a structure of a communication apparatus 1000 according to an embodiment of this application;
FIG. 10 is a diagram of a structure of a communication apparatus 2000 according to an embodiment of this application; and
FIG. 11 is a diagram of a structure of a chip system 3000 according to an embodiment of this application.

### DESCRIPTION OF EMBODIMENTS

The following describes the technical solutions of this application with reference to the accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is briefly referred to as a 3GPP network. The 3GPP network usually includes but is not limited to a 5G mobile communication network, a 4th generation (4th generation, 4G) mobile communication network, and another future communication system, for example, a 6th generation (6th generation, 6G) mobile communication network.

For ease of description, the PLMN or the 5G network is used as an example for description in embodiments of this application.

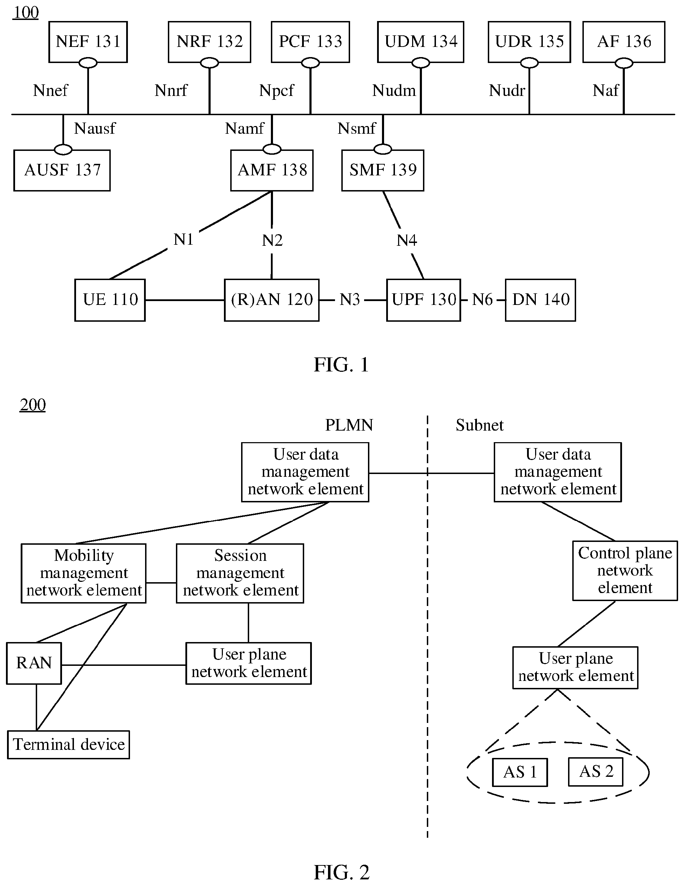

FIG. 1 is a diagram of a network architecture 100. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes a function of a network element in each part.

The terminal device part may include a terminal device 110. The terminal device 110 is a device that provides voice and/or data connectivity for a user. The terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in the (radio) access network (R)AN 120. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, and include an indoor terminal device, an outdoor terminal device, a handheld terminal device, or a vehicle-mounted terminal device; may be deployed on a water surface (for example, on a ship); or may be deployed in the air (for example, on an aircraft, a balloon, or a satellite). The terminal device 110 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the terminal device 110 may be a handheld device having a wireless communication function, a compute device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, or the like. The terminal device herein is a 3GPP terminal. A type or the like of the terminal device is not limited in embodiments of this application.

The (R)AN 120 may include one or more access network elements or access network devices. An interface between the access network device and the terminal device may be a Uu interface (or referred to as an air interface, that is, a message exchanged between the access network device and the terminal device may be referred to as an air interface message). Certainly, in future communication, names of these interfaces may remain unchanged, or may be replaced with other names. This is not limited in this application. The (R)AN 120 is a device that provides a wireless communication function for the terminal device 110, and may connect the terminal device to a node or device in a wireless network, and may also be referred to as a network device. The (R)AN 120 may be considered as a sub-network of an operator network, and is an implementation system between a service node in the operator network and the terminal device 110. For example, the terminal device 110 may be connected to the service node in the operator network through the (R)AN 120, to obtain a service provided by the service node. The (R)AN 120 includes but is not limited to a next generation NodeB (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small base station device, a mobile switching center, a network device in a future network, or the like. The access network device may alternatively be a module or unit that completes a function of a base station, for example, includes a central unit (central unit, CU) and a distributed unit (distributed unit, DU). In a possible network structure, the CU may be configured to support communication in protocols such as radio resource control (radio resource control, RRC), a packet data convergence protocol (packet data convergence protocol, PDCP), and a service data adaptation protocol (service data adaptation protocol, SDAP). The DU may be configured to support communication in a radio link control (radio link control, RLC) layer protocol, a medium access control (medium access control, MAC) layer protocol, and a physical layer protocol. A specific technology and a specific device form that are used by the access network device are not limited in embodiments of this application. In systems using different radio access technologies, devices with functions of the access network device may have different names. For ease of description, in all embodiments of this application, the foregoing apparatuses that provide the wireless communication function for the terminal device 110 are collectively referred to as access network devices, or referred to as RANs for short. It should be understood that, a specific type of the access network device is not limited in this specification.

The CN part may include but is not limited to the following network functions (network functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, an application function (application function, AF) 136, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network.

The following further briefly describes the NF functions included in the CN.
1. The UPF 130 is a gateway provided by an operator, and is a gateway for communication between the operator network and the DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by the operator, mainly enables a third party to use a service provided by a network, supports the network in exposing a capability, an event, and data analysis of the network, provides security configuration information for the PLMN from an external application, provides conversion of information exchanged inside and outside the PLMN, and the like.
3. The NRF 132 is a control plane function provided by the operator, and may be configured to maintain real-time information of a network function and a service in a network.
4. The PCF 133 is a control plane function provided by the operator, mainly supports providing a unified policy framework to control a network behavior, providing a policy rule for a control layer network function, and is responsible for obtaining user subscription information related to policy decision. For example, the PCF 133 may be divided into two PCFs having different functions, which are respectively a UE-PCF and an AMF-PCF.
5. The UDM 134 is a control plane function provided by the operator, and is responsible for storing information such as a subscriber permanent identifier (subscriber permanent identifier, SUPI), a generic public subscriber identifier (generic public subscriber identifier, GPSI), and a credential of a subscriber in the operator network. The SUPI is first encrypted during transmission, and an encrypted SUPI is referred to as a subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom or a user using a subscriber identity module card of China Mobile. The credential of the subscriber may be a long-term key stored in the subscriber identity module card, or a stored small file, for example, information related to encryption of the subscriber identity module card, and is used for authentication and/or authorization. It should be noted that, for ease of description, information such as the permanent identifier, the credential, a security context, authentication data, and a token related to verification/authentication and authorization is not limited or distinguished in embodiments of this application.
6. The UDR 135 is a control plane function provided by the operator, and provides a function of storing and obtaining subscription data for the UDM, provides a function of storing and obtaining policy data for the PCF, stores and obtains NF group ID (group ID) information of the terminal device 110, and the like.
7. The AF 136 is a control plane function provided by the operator, and mainly interacts with another NF in the PLMN to provide a corresponding service, for example, provide visited network selection information for the roaming terminal device 110, guide routing of a data flow, and access the NEF 131.
8. The AUSF 137 is a control plane function provided by the operator, and is usually used for primary authentication, that is, authentication between the terminal device 110 (a subscriber) and the operator network.
9. The AMF 138 is a control plane network function provided by the operator network, and is responsible for access control and mobility management when the terminal device 110 accesses the operator network, for example, including functions such as mobility state management, allocation of a temporary user identity, and authentication and authorization performed on the terminal device 110.
10. The SMF 139 is a control plane network function provided by the operator network, is responsible for managing a protocol data unit (protocol data unit, PDU) session (including session establishment, modification, and release) of the terminal device 110, and is used for selection and reselection of a user plane function network element, internet protocol (internet protocol, IP) address allocation of the terminal device, quality of service (quality of service, QoS) control, and the like. The PDU session is a channel used to transmit a PDU, and the terminal device 110 and the DN 140 transmit the PDU to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

It should be understood that, the foregoing network elements or NFs may be physical entities in a hardware device, software instances running on dedicated hardware, or virtualized functions instantiated on a sharing platform (for example, a cloud platform). In short, an NF may be implemented by hardware or software. In addition, there may be one or more pieces of hardware (or software) for implementing all functions of an NF.

It should be understood that, the AMF, the SMF, the UPF, the NEF, the AUSF, the NRF, the PCF, and the UDM shown in FIG. 1 may be understood as network elements configured to implement different functions in the core network. These network elements may be combined into a network slice as required, and may be independent devices, or may be integrated into a same device to implement different functions. Specific forms of the network elements are not limited in this application.

It should be further understood that, the foregoing names are defined merely for ease of distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

It should be further understood that, Nnef, Nnrf, Npcf, Nudm, Nudr, Nausf, Namf, Nsmf, Naf, N1, N2, N3, N4 and N6 in FIG. 1 are interface sequence numbers. For example, for meanings of the interface sequence numbers, refer to meanings defined in the 3GPP standard protocol. The meanings of the interface sequence numbers are not limited in this application. In addition, a name of an interface between the network functions in FIG. 1 is merely an example. In a specific implementation, the name of the interface in the system architecture may alternatively be another name. This is not limited in this application.

Currently, 5G introduces technologies such as MEC and slicing, used to deploy networks in regions such as campuses, factories, and museums, to provide customized services for users in the regions. In this way, a 3GPP mobile network is promoted from 2C to 2B, to expand a market of the 3GPP mobile network. For ease of description, in this application, a network that provides customized services for users in a specified region is referred to as a subnet. It should be understood that, the subnet may be considered as an extension of the operator network PLMN, and may be implemented by integrating with the operator network PLMN, or may be implemented independently of the operator network PLMN.

A technology supporting a subnet scenario in 5G includes but is not limited to slicing, MEC, LADN, or SNPN. However, when the operator deploys the subnet by using the technology, for example, slicing, MEC, LADN, or SNPN, the following problems may exist, for example:
(1) When the operator deploys the subnet by using technologies such as slicing, MEC, and LADN, only access of a subscriber of the operator can be supported, and a user of another operator cannot access the subnet. For example, when a subnet is deployed by China Mobile, only a terminal device whose home operator is China Mobile can access the subnet, and a terminal device whose home operator is China Telecom or China Unicom cannot access the subnet.
(2) When the operator deploys the subnet by using slicing, MEC, and LADN, the subnet cannot independently control permission for accessing the subnet by the terminal device (for example, whether a specific terminal device is allowed to access the subnet). Usually, the access permission of the terminal device can be added or deleted only via a UDM or a PCF in a home network of the terminal device. Slicing is used as an example. A slice corresponding to the subnet needs to be added to slice subscription maintained by a UDM of the operator network, so that the terminal device can access the slice corresponding to the subnet. If home locations of terminal devices in the subnet are different, UDMs of home location networks of the terminal devices need to be separately modified. This makes deployment and maintenance of the subnet complex, and limits development of the subnet scenario.
(3) The SNPN technology is that a network is independently deployed by a subnet tenant. The SNPN includes a UDM, and may locally manage a subscription of a terminal device that requests to access the subnet. For ease of description, in embodiments of this application, a subnet user may be used to replace the terminal device that requests to access the subnet. However, the SNPN technology supports only access of a subnet dedicated terminal device (a terminal device having a subnet subscriber identity module (subscriber identity module, SIM) card), and does not support access of a 2C user (having a SIM card of a large network operator, but no subnet SIM card). Therefore, an access scenario oriented to 2C users (students, employees, visitors, and the like) in schools or enterprise campuses cannot be well supported, limiting development of the subnet scenario.

In view of this, this application provides a communication method and a communication apparatus, so that the terminal device can access the subnet and obtain a service provided by the subnet.

For example, an application scenario of this application includes but is not limited to:
(1) High-speed railway station scenario. A cloud game vendor may sign a contract with an operator to provide a local cloud game service for all users of China Mobile/China Unicom/China Telecom. In this scenario, an intranet server may be deployed in a high-speed railway station by the cloud game vendor, and the user may access a cloud game intranet in the high-speed railway station, to shorten a service access delay and improve user experience. It should be understood that, in this scenario, the user may not need to participate in a service subscription procedure, and all users entering this region may be authorized to access a cloud game service.
(2) Scenic spot (for example, a museum) scenario. An intranet server may be deployed locally in a scenic spot to provide an intranet application. A user may sign a contract with an operator based on a local value-added service provided by the museum and the operator in collaboration, and then a network side delivers an access policy corresponding to the local value-added service, to implement differentiated service experience/quality of service assurance. In this scenario, the user in the scenic spot may access the intranet server of the scenic spot, to reduce a communication delay.

Based on actual requirements of different scenarios, the following describes, with reference to FIG. 2 to FIG. 4, networking forms to which embodiments of this application are applicable.

FIG. 2 is a diagram of a network architecture 200 to which an embodiment of this application is applicable. As shown in FIG. 2, the architecture includes a subnet part and a large network operator network PLMN part. The subnet is independent of the PLMN. In other words, the subnet may be understood as a form of a subnet operator network, and the subnet operator maintains the subnet. Network elements (or nodes) in the subnet and the PLMN may establish a communication connection and exchange information. It should be understood that, the subnet supports information exchange with one or more PLMNs.

For example, the PLMN includes a user data management network element, a mobility management network element, a session management network element, a user plane network element, a RAN, and a terminal device. The user data management network element in the PLMN may correspond to the PCF, the UDM, or the UDR in the architecture shown in FIG. 1, and is configured to manage user data in the PLMN. The mobility management network element, the session management network element, the user plane network element, the RAN, and the terminal device in the PLMN may respectively correspond to the AMF, the SMF, the UPF, the (R)AN, and the UE in the architecture shown in FIG. 1. The terminal device and the mobility management network element in the PLMN may exchange information by using NAS signaling. The subnet includes a user data management network element, a control plane network element, and a user plane network element. The user data management network element in the subnet may correspond to the PCF, the UDM, or the UDR in the architecture shown in FIG. 1, and is configured to manage user data in the subnet. The control plane network element in the subnet may correspond to the AMF or the SMF in the architecture shown in FIG. 1. Optionally, the subnet may further include one or more application servers (application servers, ASs), for example, an AS 1 and an AS 2. The AS is configured to provide an application service for the subnet. Usually, the AS may correspond to the DN in FIG. 1. For example, the user plane network element may separately exchange information with the AS 1 and the AS 2.

Optionally, the user data management network element in the PLMN may be considered as a first network element, a large network data node, a region database (for example, a region DB), a region data node, or the like in embodiments of this application. In embodiments of this application, the region DB may manage the user data in the PLMN, or may determine whether the terminal device is allowed to access the subnet, execute a policy decision for the terminal device to access the subnet, and the like. The user data management network element in the subnet may be considered as a second network element, a subnet data node, or a subnet database (for example, a subnet DB) in embodiments of this application. In embodiments of this application, the subnet DB may manage the user data in the subnet, or may execute an access policy decision for the terminal device to access the subnet, or the like. The user data management network element may be integrated with the mobility management network element and the session management network element, or may be independently disposed. This is not limited in this application.

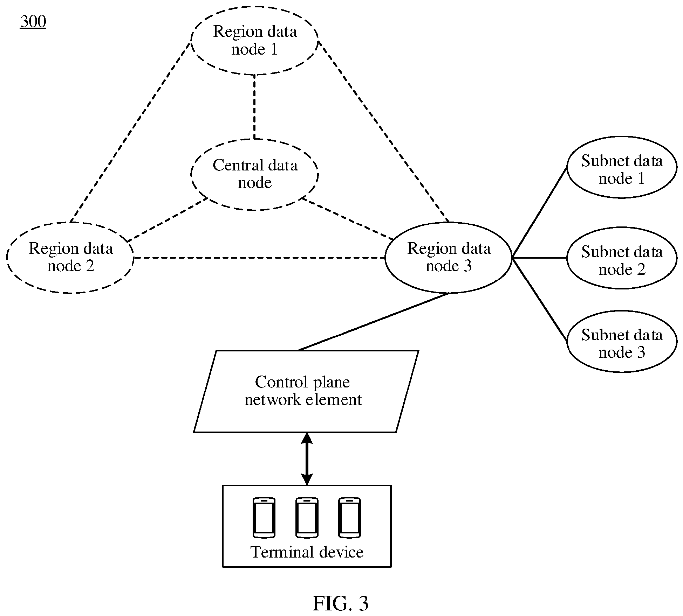

FIG. 3 is a diagram of another network architecture 300 to which an embodiment of this application is applicable. As shown in FIG. 3, the architecture includes region data nodes (for example, a region data node 1, a region data node 2, and a region data node 3) and subnet data nodes (for example, a subnet data node 1, a subnet data node 2, and a subnet data node 3). The region data node is mainly configured to: manage user data in a large network operator network PLMN, determine whether a terminal device is allowed to access a subnet, obtain subnet subscription information provided by the subnet, execute a policy decision for the terminal device to access the subnet, and the like. The subnet data node is mainly configured to: manage user data in the subnet, and execute an access policy decision for the terminal device to access the subnet, or is configured to: provide the subnet subscription information for a large network, so that a region data node of the large network executes the access policy decision for the terminal device to access the subnet, and the like.

It should be understood that, in the network architecture 300, a large network operator includes one or more region data nodes. The one or more region data nodes may be data nodes that support providing a service for the terminal device in the large network operator. The subnet data node may provide customized services for users in a specific region (for example, a campus, a factory, or a museum).

For example, the subnet data node 1, the subnet data node 2, and the subnet data node 3 separately establish a communication connection to the region data node 3, the region data node 3 establishes a communication connection to a control plane network element in the large network, and the control plane network element in the large network establishes a communication connection to the terminal device. For example, the terminal device may request, via the control plane network element in the large network, the region data node 3 to access the subnet, for example, obtain a service provided by the subnet data node 1, the subnet data node 2, or the subnet data node 3. Optionally, the region data node 3 may further establish communication connections to the region data node 1, the region data node 2, and a central data node. The central data node is responsible for maintaining information exchange between the region data node 1, the region data node 2, and the region data node 3 in the large network operator network. It should be noted that, in the foregoing scenario, the terminal device may have a subscription to the large network, or may have no subscription to the large network. That having the subscription to the large network may be understood as that the terminal device has a service subscription to the large network, or the large network maintains subscription data of the terminal device.

For example, the control plane network element may correspond to the control plane network element, for example, the AMF or the SMF, in the architecture shown in FIG. 1, or may be considered as a control plane network element in a next generation network. This is not limited in this application. The region data node and the subnet data node may correspond to the UDM or the PCF in the network architecture shown in FIG. 1 from a perspective of functions. For details, refer to related descriptions in FIG. 1.

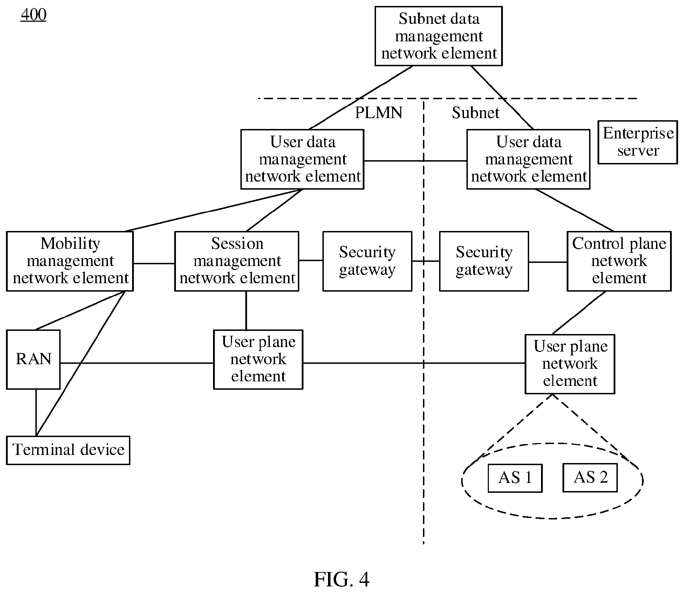

FIG. 4 is a diagram of still another network architecture 400 to which an embodiment of this application is applicable. As shown in FIG. 4, in comparison with the network architecture 200 shown in FIG. 2, a subnet data management network element is newly added to the network architecture. Information exchange may be performed between a subnet and a large network operator network PLMN via the subnet data management network element. The subnet data management network element may be provided by a third-party operator other than a large network operator and a subnet operator. For example, the third-party operator provides a cross-network interaction platform, and the cross-network interaction platform includes the subnet data management network element. For other content, refer to related descriptions in FIG. 2.

For example, the subnet data management network element may be considered as a third network element, a cross-network data node, or a cross-network DB in embodiments of this application. In embodiments of this application, a specific form of the subnet data management network element may be a cross-operator service registration network element (similar to an NRF in a 5G network), or may be a cross-operator topology management node (similar to OAM in an operator network). This is not limited in this application. The subnet data management network element may provide the following functions: maintaining a correspondence between a terminal device and a subnet, to support a large network control plane in selecting a subnet network for the terminal device to access; maintaining subnet granularity data, such as subnet service information and a subnet service access policy; and maintaining information such as network topologies and service access policies of a plurality of subnets, to avoid excessive coupling between a large network PLMN and a subnet, provide a multi-operator interconnection capability for the subnet, and reduce complexity of interconnection with a plurality of operators in a deployment process of the subnet.

It should be noted that, the network architectures shown in FIG. 1 to FIG. 4 are merely examples provided for ease of understanding of the technical solutions of this application, and should not constitute any limitation on the technical solutions of this application.

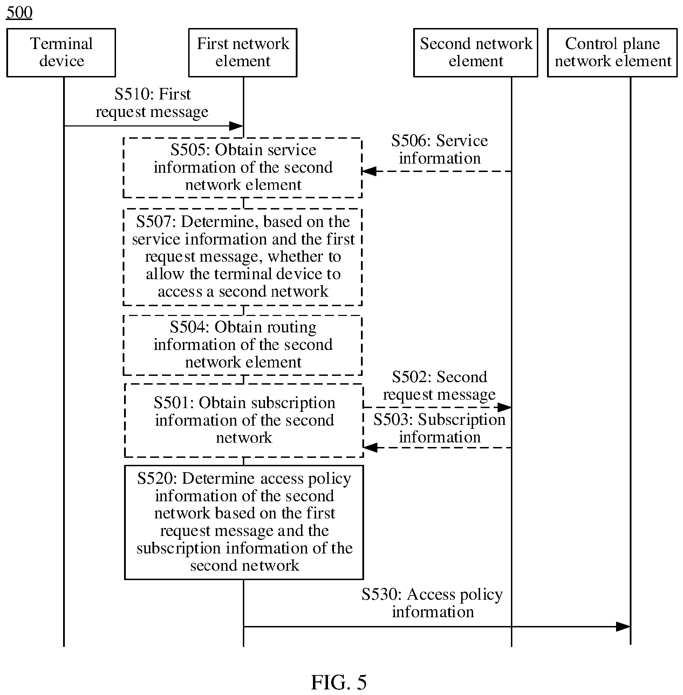

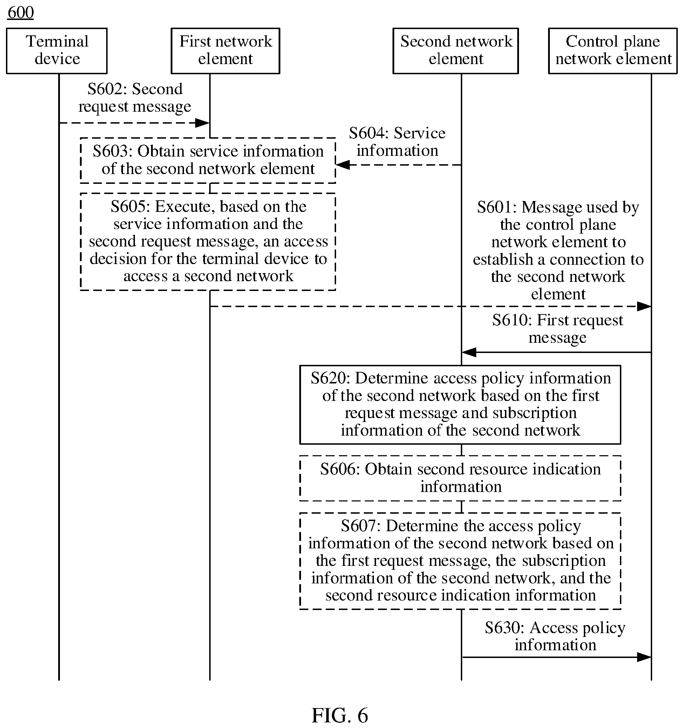

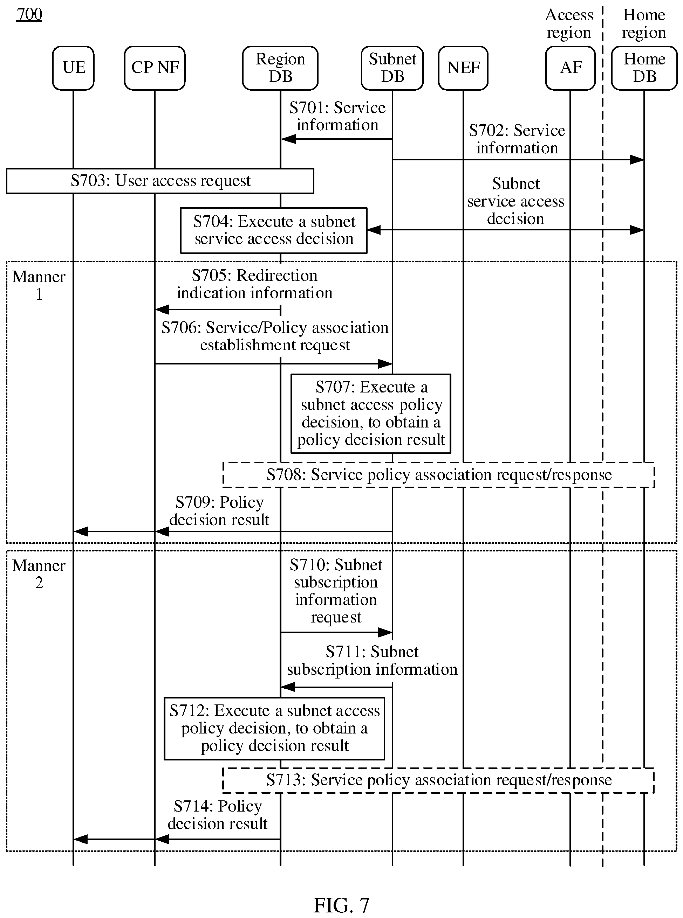

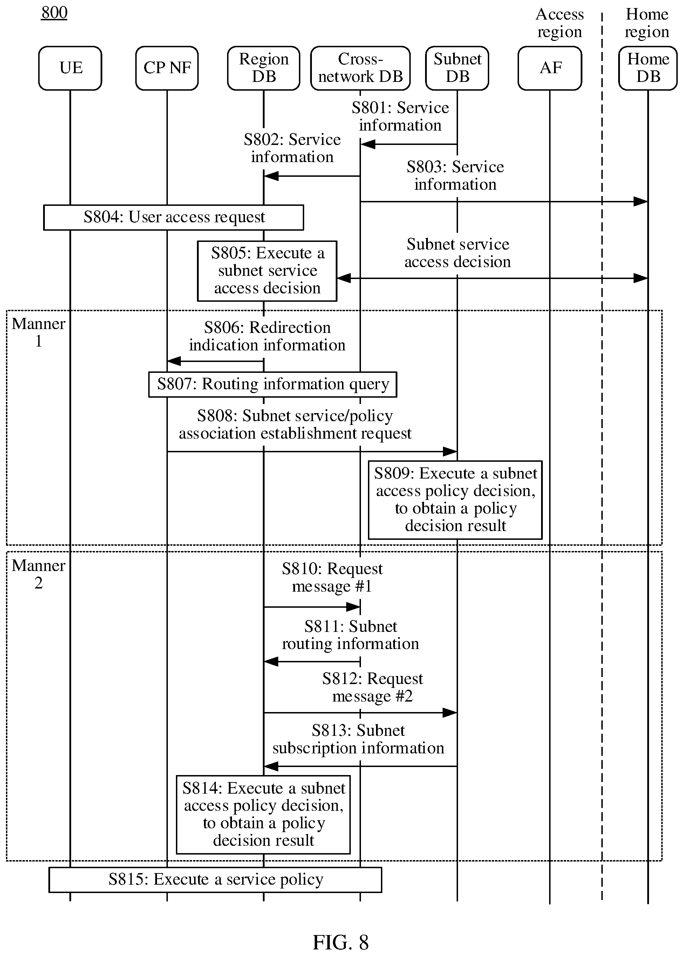

The following describes, in detail with reference to the accompanying drawings, a communication method provided in embodiments of this application. Embodiments provided in this application may be applied to the communication systems shown in FIG. 2 to FIG. 4. To implement effective access control of a subnet user, this application provides the following methods shown in FIG. 5 to FIG. 8. It should be understood that, the method embodiments shown in FIG. 5 to FIG. 8 may be combined with each other, and steps in the method embodiments shown in FIG. 5 to FIG. 8 may be referenced with each other. For example, in embodiments of this application, the method embodiments shown in FIG. 7 and FIG. 8 may be considered as possible implementations of implementing functions of the method embodiments shown in FIG. 5 and FIG. 6. In FIG. 5, an access policy decision is mainly executed by a first network element in a first network (for example, a region data node region DB on a large network side). In FIG. 6, an access policy decision is mainly executed by a second network element in a second network (for example, a subnet DB on a subnet side). The solutions in FIG. 7 and FIG. 8 may be considered as further refinement of the solutions in FIG. 5 and FIG. 6. FIG. 7 is mainly applicable to the foregoing architectures 200 and 300, that is, a scenario in which a region data node (for example, a region DB) directly interacts with a subnet data node (for example, a subnet DB). FIG. 8 is mainly applicable to the foregoing architecture 400, that is, a scenario in which a region data node (for example, a region DB) indirectly interacts with a subnet data node (for example, a subnet DB) via a cross-network data node (for example, a cross-network DB). A terminal device is supported in accessing the second network in a first region through the first network, so as to obtain a service provided by the second network and ensure user experience.

FIG. 5 is a schematic flowchart of a communication method 500 according to an embodiment of this application. As shown in FIG. 5, the method procedure may be performed by a terminal device, a first network element and a control plane network element in a first network, or a second network element in a second network, or may be performed by a module and/or a component (for example, a chip or an integrated circuit) that have/has a corresponding function and that are/is installed in the first network element, the control plane network element, the second network element, or the terminal device. Optionally, the method procedure may alternatively be performed by a third network element (for example, a cross-network DB) or a module and/or a component (for example, a chip or an integrated circuit) that have/has a corresponding function and that are/is installed in the third network element. This is not limited in this application. For ease of description, the following uses the terminal device, the first network element and the control plane network element in the first network, and the second network element in the second network as execution bodies for description. The method includes the following plurality of steps. For a part that is not described in detail, refer to an existing protocol.

In this embodiment of this application, the first network may be referred to as a large network, and may be understood as a mobile operator network. The second network may be referred to as a subnet, and is maintained by a subnet operator. The first network and the second network may be operated by a same operator, or may be operated by different operators. For example, the first network element may be the user data management network element in the PLMN in FIG. 2, or the region data node 3 in FIG. 3. The second network element may be the user data management network element in the subnet in FIG. 2, or the subnet data node 2 in FIG. 3. In this embodiment of this application, the control plane network element CP NF in the first network may be the AMF network element or the SMF network element shown in FIG. 1. This is not limited in this application.

S510: The terminal device sends a first request message to the first network element, and correspondingly, the first network element receives the first request message from the terminal device.

The first request message may be used by the terminal device to request to access the second network, or may be used by the terminal device to request to access a service in the second network. For example, the terminal device may send the first request message to a base station or the control plane network element in the large network, and then the base station or the control plane network element in the large network forwards the first request message to the first network element.

Optionally, before the terminal device sends the first request message to the first network element, when the terminal device camps on the first network, the terminal device may initiate a registration procedure to the first network element. After the terminal device completes registration, the first network element may store information such as location information of the terminal device and an identifier of the terminal device. Further, the terminal device may request to access the second network or the service in the second network by performing step S510.

Optionally, the terminal device may have a subscription to the first network, or may have no subscription to the first network. This is not limited in this application. That having the subscription to the first network may be understood as that the terminal device has a service subscription to the first network, or the first network maintains subscription data of the terminal device.

In this application, the first request message includes one or more of the following information:

### (1) Identifier of the terminal device.

For example, the identifier of the terminal device, namely, an identifier of a subnet user, identifies the terminal device, and may be, for example, an ID or address information of the terminal device, or another representation form indicating the terminal device.

### (2) Identifier of the second network.

For example, the identifier of the second network, namely, a subnet identifier, identifies a target subnet that the terminal device requests to access, and may be, for example, an ID or address information of the second network, or another representation form indicating the second network. For example, the first network element may determine, based on the identifier of the second network, the target subnet that the terminal device requests to access, and then perform a subsequent redirection indication procedure or an access policy decision procedure.

### (3) Information indicating the service in the second network.

For example, the information indicating the service in the second network, namely, subnet service indication information, includes information such as a service identifier, a DNN, and S-NSSAI corresponding to a subnet service, to indicate a target subnet service that the terminal device requests to access. For example, if the terminal device includes information such as specific S-NSSAI, a specific DNN, and a specific subnet service ID in the first request message, the first network element may determine, based on a mapping relationship between the target subnet service and the target subnet, the target subnet that the terminal device requests to access.

Optionally, the subnet service may be a campus service, a region service, a private network service, a dedicated network service, or the like, or another service to business 2B or to consumer 2C.

S520: The first network element determines access policy information of the second network based on the first request message and subscription information of the second network.

The access policy information indicates a policy used by the terminal device to access, in a first region, the second network through the first network.

For example, if the terminal device is currently in a reachable state, the first network element may execute the access policy decision based on the first request message and the subscription information of the second network.

In this embodiment of this application, the first network and the second network support providing a service for a terminal device in the first region. The first region may be understood as a service region of the subnet. For example, the first region is an enterprise campus, a scenic spot (for example, a park, a museum, or a theater), a school, or a shopping mall.

Optionally, the first network element in the first network and the second network element in the second network may serve one or more regions, and one or more services may be provided in each region. Services of the one or more regions may include a subnet service in the first region.

Optionally, the first region includes a plurality of regions at different geographical locations. For example, the first region is a service region of a campus service of an enterprise A. The campus service of the enterprise A may be provided in a city A and a city B. Therefore, the first region may include the city A and the city B.

For example, a subscription location in which the terminal device subscribes to the subnet service may be understood as a location of a service region of the subnet service, or an access location of the subnet service. For example, the subscription location of the subnet service is an administrative region like a city or a province in which the subnet service is located. Optionally, if the terminal device subscribes to the subscription location of the subnet service, it may be understood as that the terminal device accesses the access location of the subnet service.

It should be understood that, there is a scenario in which a provider of a service subscribes to the service with an operator, so that all terminal devices that enter a service region of the service can access the subnet service without an explicit subscription. For example, that the terminal device subscribes to the subnet service may include a case in which the terminal device enters the service region of the subnet service without an explicit subscription.

In this application, the subscription information of the second network includes subscription information at a user granularity (for example, a user account balance or a package balance) or subscription information at a network granularity. The subscription information of the second network includes one or more of the following information:

### (1) List of accessible services.

For example, the list of accessible services includes information about one or more subnet services, and the one or more subnet services may be accessible by a terminal device, that is, the terminal device may request the one or more subnet services from the second network. For example, if a terminal device is used as a granularity, for each terminal device, a list of accessible services indicates at least one subnet service that is accessible by the terminal device.

### (2) Service assurance subscription information.

For example, the service assurance subscription information may include information such as a bandwidth, a scheduling priority, and a delay.

### (3) Service range of the second network.

For example, the service range of the second network may include information such as a service region, a service type, a service object, and a service name provided by the subnet. For example, the second network supports providing a session establishment service for a subscribed terminal device.

### (4) Information about a terminal device authorized to access a subnet service.

For example, for each subnet service, there is a list indicating a terminal device authorized to access the subnet service. For another example, for each region, there is a list indicating at least one terminal device authorized to access a subnet service in the region, where one or more subnet services may be provided in the region. When a plurality of subnet services are provided in one region, it indicates that at least one terminal device in the list may access the plurality of subnet services.

It should be understood that, "authorized to access the subnet service" may be replaced with "allowed to access the subnet service", which may be understood as subscribing to the subnet service.

### (5) Network information corresponding to a subnet service.

For example, the network information may be a DNN or S-NSSAI. For example, the subscription information uses a DNN as a granularity. For each DNN, there is a list indicating at least one terminal device that subscribes to a subnet service corresponding to the DNN. For another example, the subscription information uses S-NSSAI as a granularity. For each piece of S-NSSAI, there is a list indicating at least one terminal device that subscribes to a subnet service corresponding to the S-NSSAI.

It should be understood that, a relationship between the DNN and the subnet service is that the terminal device may associate the subnet service with the DNN based on local configuration information or a terminal device policy, that is, the subnet service can be accessed only by using the DNN. Similarly, a relationship between the S-NSSAI and the subnet service is that the terminal device may associate the subnet service with the S-NSSAI based on the local configuration information or the terminal device policy, that is, the subnet service can be accessed only by using the S-NSSAI.

### (6) Subscription usage quota information of a subnet service.

For example, the subscription information uses a service as a granularity. For each subnet service, the subscription information includes a traffic package for the subnet service, a quota package for simultaneous access of a plurality of terminal devices, and the like.

Optionally, the access policy information of the subnet service in the second network may be understood as a set of candidate policies of the subnet service, and each policy has a corresponding applicable scenario. The access policy information determined by the first network element may be understood as a policy applicable to the terminal device for accessing the subnet service in the first region.

In this embodiment of this application, the access policy information may also be replaced with a policy decision result. The policy decision result may include a terminal device policy (UE Policy), an access and mobility management policy (access and mobility management policy, AM policy), or a session management policy (session management policy, SM policy). For a specific explanation, refer to the following related descriptions. Because the SM policy may be used for session establishment of the terminal device, and a session may be used for transmission of the subnet service, the policy decision result may be further used by the terminal device to perform transmission of data of the subnet service in the first region.

In this application, the access policy information of the second network includes one or more of the following information:

### (1) List of services that the terminal device is authorized to access.

For example, the list of services that the terminal device is authorized to access includes information about one or more subnet services, and the one or more subnet services may be accessible by the terminal device, that is, the second network may provide the one or more subnet services for the terminal device.

### (2) Access range of the authorized terminal device.

For example, the access range of the authorized terminal device includes policy information for the terminal device to access a specific subnet service, for example, a specific DNN and specific S-NSSAI that need to be used to access the subnet service.

### (3) Policy authorization information.

For example, the policy authorization information includes policy authorization information at a granularity of a large network/subnet user and a subnet.

Optionally, the policy authorization information may include a UE policy of a subnet service, an AM policy of a subnet service, or an SM policy of a subnet service.

The UE policy may be a UE route selection policy (UE route selection policy, URSP) or an access network discovery and selection policy (access network discovery and selection policy, ANDSP), where the URSP may indicate how the UE determines a target packet data unit (packet data unit, PDU) session parameter when accessing the subnet service, for example, information such as a DNN, S-NSSAI, a session and service continuity (session and service continuity, SSC) mode (mode), an access type (access type), and a PDU session type (PDU session type). The ANDSP may be used for assisting the terminal device in selecting a non-3GPP (Non-3GPP) network corresponding to the subnet service.

The AM policy may be a radio access technology (radio access technology, RAT)/frequency selection priority (RAT/frequency selection priority, RFSP) policy, service area restriction (service area restriction) information, or the like, used for assisting the terminal device in selecting an access frequency matching the subnet service, or performing service access with reference to a service region restriction matching the subnet service.

The SM policy may be a session parameter authorizable for use, for example, a quality of service (quality of service, QoS) policy, a charging policy, a data offloading policy, a DNN, or S-NSSAI.

### (4) Service assurance policy information.

For example, the service assurance policy information is service assurance policy information at a granularity of a subnet user/subnet service/subnet, for example, QoS assurance that needs to be provided for a service, and may include a packet loss rate, a delay, a bandwidth, a scheduling priority, and the like.

In an implementation, before performing step S520, the first network element first obtains information indicating a location of the terminal device, and when the service range of the second network includes the location of the terminal device, determines to allow the terminal device to access the second network. For example, if the location information of the terminal device indicates that the terminal device is located within the service range of the second network, or a physical distance between the terminal device and the service range covered by the second network is less than a preset threshold, the first network element determines that the terminal device can access the second network.

The location information of the terminal device may be geographical location information or an IP address. A manner in which the first network element obtains the location information of the terminal device may be as follows: obtaining from the terminal device (for example, the first network element sends a message for querying for the location information of the terminal device to the terminal device), obtaining through local query (for example, the terminal device camps on the first network and completes registration in the first network, and the first network element may store the location information of the terminal device), obtaining from the third network element (for example, a cross-network DB) (for example, the third network element obtains the information of the terminal device from the terminal device and forwards the information to the first network element), or the like. This is not limited in this application.

In another implementation, the first network element obtains second resource indication information, where the second resource indication information indicates a resource that the first network authorizes the terminal device to use; and further, determines the access policy information of the second network based on the first request message, the subscription information of the second network, and the second resource indication information, where the access policy information of the second network includes first resource indication information, and the first resource indication information indicates a resource that is in the first network and that is used by the terminal device to access the second network through the first network. For example, the second resource indication information indicates that the first network authorizes the terminal device to access the second network by using a DNN #1 and/or a DNN #2 provided by the first network, and the first resource indication information indicates that after executing the policy decision, the first network element determines to authorize the terminal device to access the second network by using the DNN #1.

For example, that the first network element obtains the second resource indication information includes: If the first network includes a network element configured to store a resource that is in the first network and that is used by the terminal device, for example, a PCF or a UDM, the first network element may obtain the second resource indication information from the PCF or the UDM.

In this embodiment of this application, the resource that the first network authorizes the terminal device to use may be understood as a resource that is in the first network and that can be used by the terminal device when accessing the second network or the service in the second network through the first network. For example, the resource that the first network authorizes the terminal device to use includes a resource at a user granularity or a resource at a subnet granularity, for example, information such as a guaranteed bandwidth range that can be provided by the first network, remaining traffic authorized by the first network for use, and a DNN and/or an S-NSSAI list authorized by the first network for access.

For example, the resource at the user granularity may be understood as resource information for each user. There is a list indicating information such as a bandwidth, remaining traffic, a DNN and/or an S-NSSAI list that the first network authorizes each user to use. There may be one or more users, and bandwidths or remaining traffic authorized to the users for use may be the same or different. The resource at the subnet granularity may be understood as resource information for each subnet. There is a list indicating information such as a bandwidth and remaining traffic that the first network authorizes each subnet to use. There may be one or more subnets, and bandwidths or remaining traffic authorized to the subnets for use may be the same or different.

Further, step S520 is performed, that is, the first network element determines the access policy information of the second network based on the first request message and the subscription information (optionally, further including the second resource indication information) of the second network. In other words, the first network element executes the access policy decision based on input information (for example, the identifier of the terminal device, the identifier of the second network, or the subnet service indication information carried in the first request message) on a large network side and input information (for example, the list of accessible services and the service range of the second network in the subscription information of the second network) on a subnet side.

In an example, it is assumed that the first request message includes the identifier of the terminal device and indication information of a second subnet service. The first request message is used by the terminal device to request to access the second subnet service in the second network, and the list of accessible services in the subscription information of the second network includes an identifier of a first subnet service and an identifier of the second subnet service, indicating that the second network supports access to the first subnet service and the second subnet service. In this case, the access policy information may be: authorizing the terminal device to access the second subnet service in the second network.

In another example, it is assumed that the first request message includes the identifier of the terminal device and the identifier of the second network. The first request message is used by the terminal device to request to access the second network, and the list of accessible services in the subscription information of the second network includes an identifier of a first subnet service and an identifier of a second subnet service, indicating that the second network supports access to the first subnet service and the second subnet service. Network information corresponding to the first subnet service is the DNN, and network information corresponding to the second subnet service is the S-NSSAI. Assuming that the resource at the subnet granularity is a bandwidth of X MHz that the first network authorizes the terminal device to use, the access policy information of the second network may be: authorizing the terminal device to access the second network or the second subnet service by using the S-NSSAI, or authorizing the terminal device to access the second network or the first subnet service by using the DNN. A bandwidth used for the terminal device to access the second network, the first subnet service, or the second subnet service through the first network is less than or equal to X MHz.

Optionally, before step S520 is performed, the method further includes step S501.

S501: The first network element obtains the subscription information of the second network. A specific implementation may include the following steps S502 and S503.

S502: The first network element sends a second request message to the second network element in the second network, and correspondingly, the second network element receives the second request message from the first network element.

The second request message is used to request to obtain the subscription information of the second network, and the second request message includes the identifier of the second network, and correspondingly, the second network element may send all subscription information of the second network to the first network element.

Optionally, the second request message includes the identifier of the terminal device. If the second request message includes the identifier of the terminal device, the second request message is used to request to obtain subscription information related to the terminal device from the subscription information of the second network, or is used to request subscription information at a terminal device granularity. For example, assuming that the terminal device subscribes to the second network, the second network element may query the subscription information of the second network for a list of accessible services at the terminal device granularity, and determine one or more subnet services accessible by the terminal device indicated by the identifier of the terminal device in the second request message. For another example, the second network element may determine whether the identifier of the terminal device in the second request message matches the information, in the subscription information of the second network, about the terminal device authorized to access the subnet service, to determine whether to authorize the terminal device to access the subnet service in the second network.

For example, the second network element may be a subnet data node, for example, a PCF or a UDM.

In an implementation, the first network element sends the second request message to the second network element in the second network based on routing information of the second network element. For a manner of obtaining the routing information of the second network element, refer to related descriptions of the following steps S503 and S504.

S503: In response to the second request message in step S502, the second network element sends the subscription information of the second network to the first network element, and correspondingly, the first network element receives the subscription information from the second network element.

Optionally, that the first network element obtains the subscription information of the second network further includes: obtaining the subscription information of the second network from the third network element, where the third network element is configured to support information exchange between a network element in the first network and a network element in the second network. The third network element may be a cross-network data node (for example, a cross-network DB), and the cross-network data node may be provided by a cross-network operator. In other words, the cross-network data node may be provided by a third-party operator other than a large network operator and a subnet operator, for example, an indirect interaction platform that is between a large network and a subnet and that is provided by the third-party operator.

Optionally, before step S502 is performed, the method further includes step S504.

S504: The first network element obtains the routing information of the second network element.

For example, the first network element sends a third request message to the third network element, and correspondingly, the third network element receives the third request message from the first network element. The third request message is used to request to obtain the routing information of the second network element. In response to the third request message, the third network element sends the routing information of the second network element to the first network element, and correspondingly, the first network element receives the routing information of the second network element from the third network element.

In this embodiment of this application, the third network element may be a cross-network data node (for example, a cross-network DB), and the cross-network data node may be provided by a cross-network operator, for example, an indirect interaction platform that is between a large network and a subnet and that is provided by a third-party operator.

The routing information of the second network element may be device routing information of a control plane or a data plane, a list of provided services, or the like of the second network. The device routing information may include information such as an IP address, an FQDN, and a host name of the second network element. This is not limited in this application.

For example, the routing information may be carried in service information in the following step S506, or may not be carried in the service information, or may be sent simultaneously with the service information, or may be sent separately from the service information, or may be sent in a same message as the service information, or may be sent in a different message from the service information. This is not limited in this application.

It should be noted that, in this application, information and/or data transmission between network elements is not limited to direct transmission, indirect transmission (including transparent transmission), or the like. To be specific, that a network element A sends information and/or data to a network element B includes that the network element A directly sends the information and/or data to the network element B through an interface between the network element A and the network element B, or may include that the network element A sends the information and/or data to a network element C, and the network element C sends the information and/or data to the network element B. In addition, a quantity of relays used for forwarding from the network element A to the network element B is not limited. For example, that a network element #2 sends routing information to a network element #1 may include a plurality of specific implementations such as that the network element #2 directly sends the routing information to the network element #1 through an interface between the network element #2 and the network element #1, the network element #2 sends the routing information to the network element #1 via a network element #3, or the network element #2 sends the routing information to the network element #1 via a control plane network element and the network element #3. Interaction between other network elements is similar. Details are not described herein again.

Optionally, before step S520 is performed, the method further includes steps S505 to S507, that is, the first network element determines, based on an access request of the terminal device and the service information of the second network, whether to allow the terminal device to access the second network. It should be noted that, steps S505 and S506 may be performed before step S510, or may be performed after step S510. This is not limited in this application.

S505: The first network element obtains the service information of the second network element. A specific implementation may include the following step S506.

S506: The second network element sends the service information to the first network element, and correspondingly, the first network element receives the service information from the second network element.

Optionally, the second network element sends the service information of the second network element to a home network element or the third network element, and then the first network element obtains the service information of the second network element from the home network element or the third network element. The home network element may be a network element in a region in which the subscription data of the terminal device is located, or a home data storage network element (for example, a home DB) of the terminal device, for example, a node that is in a home location of a user and that is responsible for maintaining user data, for example, a UDM, a UDR, or a PCF in a home network, that is, the UDR, the UDM, and the PCF are all located in a home location of the terminal device.

It should be understood that, the second network element may send the service information of the second network element to either the first network element or the home network element. For example, if a subnet service is accessible in an entire network, the second network element may select to perform service registration with the home DB; or if a subnet service is accessible only in a current region, the second network element may select to perform service registration with a region DB or the home DB.

Optionally, the foregoing registration service procedure may be initiated by an NEF, or may be performed through a direct or an indirect interface between a subnet and a large network.

In this application, the service information includes one or more of the following information:
(1) Information about a user for which the second network element supports providing a service.

For example, the information about a user for which the second network element supports providing a service includes an identifier, for example, a UE ID, of one or more terminal devices, that is, the one or more terminal devices may request a service from the second network element.

(2) Information about a user group for which the second network element supports providing a service.

For example, the user group information may be one or more pieces of user group information. The user group information may be understood as a user group identifier. Each user group identifier includes one or more user identifiers, that is, the second network element supports one or more user access services. The user group information is similar to a user number segment and a user function, and identifies one or more subscribers. The one or more subscribers may access the second network or obtain a service provided by the second network.

### (3) Identifier of the second network.

For example, the identifier of the second network, namely, a subnet identifier, may be, for example, an ID or address information of the second network, or another representation form indicating the second network.

### (4) Open access indication information.

For example, the open access indication information indicates that a subscribed or an unsubscribed terminal device is allowed to access the second network, that is, the terminal device is supported in accessing the second network without a subscription.

### (5) Identifier of a service supported by the second network element.

For example, an identifier of a subnet service supported by the second network element, namely, a subnet service identifier, may be in a form of a name, an application identifier, a domain name, an FQDN, or the like of the subnet service, that is, the second network may provide the subnet service.

S507: The first network element determines, based on the service information and the first request message, whether to allow the terminal device to access the second network.

For example, when the service information and the first request message meet one or more of the following conditions, the first network element determines to allow the terminal device to access the second network:
For example, the first request message includes information indicating a location of the terminal device, the service information includes a service range of the second network, and the service range of the second network includes the location of the terminal device.

For another example, the first request message includes information identifying a first service in the second network, and the service information indicates that the terminal device is allowed to access the first service. The first service may be referred to as a campus service, a region service, a private network service, a dedicated network service, or the like. The first service may be a service to business 2B or to consumer 2C, that is, a customized service that the terminal device subscribes to in a specified location region. The specified location region may be referred to as the first region. That is, the first service or the first service is accessible by the terminal device in the first region. Alternatively, when the terminal device is located in the first region, the terminal device can access the first service or the first service. Alternatively, the first service or the first service is a service accessed by the terminal device in the first region. "Access" may also be understood as "visit".

It should be understood that, the first service or the first service may be a service, or may be a general term of a type of service, including one or more services. This is not limited in this application.

It should be further understood that, the first region may be understood as a service region of the first service. For example, the first region is an enterprise campus, a scenic spot (for example, a park, a museum, or a theater), a school, or a shopping mall. Optionally, the first region includes a plurality of regions at different geographical locations. For example, the first region is a service region of a campus service of an enterprise A. The campus service of the enterprise A may be provided in a city A and a city B. Therefore, the first region may include the city A and the city B.

For another example, the first request message includes information identifying the second network, and the service information indicates that the terminal device is allowed to access the second network.

For another example, the service information indicates that the second network allows a terminal device that does not subscribe to the second network to access the second network. For example, a subnet user requests to access a subnet/subnet specific service, and the subnet allows access of a non-subscribed user. If subnet data indicates that open access to an external user is supported, and no user granularity subscription support is required, the region DB determines that the subnet user can access the subnet.

Otherwise, when any one or more of the foregoing conditions are not met, the first network element determines not to allow the terminal device to access the second network.

S530: The first network element sends the access policy information to the control plane network element in the first network, and correspondingly, the first control plane network element in the first network receives the access policy information from the first network element.

For example, the control plane network element may be an access and mobility management function AMF or a session management function SMF. For example, the AMF may complete registration of the terminal device based on the access policy information, so that the terminal device accesses the second network or the service in the second network. Alternatively, the SMF may establish a session, for example, a PDU session, for the terminal device based on the access policy information, and perform transmission of the subnet service based on the PDU session.

Optionally, interaction between the terminal device and the control plane network element may alternatively be implemented through an access network RAN device. This is not limited herein.

According to the solution provided in this application, the first network element makes the access policy decision based on the received first request message and the obtained subscription information of the second network, and may obtain the access policy information of the second network, that is, the policy decision result. Based on the policy decision result, the control plane network element (for example, an AMF) may complete registration of the terminal device based on the access policy information, so that the terminal device accesses the second network or the service in the second network. Alternatively, the control plane network element (for example, an SMF) may establish a session, for example, a PDU session, for the terminal device based on the access policy information, and perform transmission of the subnet service based on the PDU session, so that the terminal device can access the second network through the first network, and obtain the service provided by the second network.

FIG. 6 is a schematic flowchart of a communication method 600 according to an embodiment of this application. As shown in FIG. 6, the method procedure may be performed by a first network element and a control plane network element in a first network, a second network element in a second network, or a terminal device, or may be performed by a module and/or a component (for example, a chip or an integrated circuit) that have/has a corresponding function and that are/is installed in the first network element and the control plane network element in the first network, the second network element in the second network, or the terminal device. This is not limited in this application. Compared with the foregoing FIG. 5 in which the access policy decision is mainly executed by the first network element (for example, a region data node region DB on a large network side) in the first network, in the solution shown in FIG. 6, the access policy decision is mainly executed by the second network element (for example, a subnet DB on a subnet side) in the second network. For ease of description, the following uses the first network element and the control plane network element in the first network, the second network element in the second network, and the terminal device as execution bodies for description. The method includes the following plurality of steps. For a part that is not described in detail, refer to an existing protocol.

S610: The control plane network element in the first network sends a first request message to the second network element in the second network, and correspondingly, the second network element in the second network receives the first request message from the control plane network element in the first network.

The first request message is used to request to obtain access policy information of the second network, or is used to request to enable the terminal device to access the second network.

It should be understood that, the first network element is a network element in the first network, and the first network element may be a large network data node, for example, a policy control function PCF or a unified data management UDM function. The first network may be referred to as a large network, and may be understood as a mobile operator network. The second network may be referred to as a subnet, and is maintained by a subnet operator. The first network and the second network support providing a service for a terminal device in a first region, and the first network and the second network may be the same or may be different.

For example, the first request message includes one or more of the following: an identifier of the second network that the terminal device requests to access, an identifier of the terminal device, location information of the terminal device, or resource information that the first network authorizes for use. For a specific explanation, refer to related descriptions of the method 500.

Optionally, before step S610 is performed, the method further includes step S601.

S601: The first network element sends, to the control plane network element in the first network, a message used by the control plane network element to establish a communication connection to the second network element, and correspondingly, the control plane network element receives, from the first network element, the message used by the control plane network element to establish the communication connection to the second network element.

The message used by the control plane network element to establish the communication connection to the second network element may be redirection indication information, and the redirection indication information includes an identifier of the second network or an identifier of the second network element. Therefore, the control plane network element sends a request message to the second network element based on the message, where the request message is used to request to obtain the access policy information of the second network, or is used to request to enable the terminal device to access the second network. In other words, the control plane network element in the first network triggers, based on the redirection indication information, to perform step S610.

The architecture shown in FIG. 2 is used as an example. The redirection indication information may carry the identifier of the second network or an identifier of a control plane network element in the second network. The control plane network element in the first network triggers, based on the redirection indication information, a request for creating a connection to the control plane network element in the second network. Then, the control plane network element in the second network exchanges information with the second network element to execute a subnet access policy decision, to obtain access policy decision information. The architecture shown in FIG. 3 is used as an example. The redirection indication information may carry the identifier of the second network or the identifier of the second network element. The control plane network element in the first network triggers, based on the redirection indication information, creation of a connection to the second network element, to obtain subnet access control policy information.

Optionally, before step S601 is performed, the method further includes steps S602 to S605.

S602: The terminal device sends a second request message to the first network element, and correspondingly, the first network element receives the second request message from the terminal device. The second request message is used to request to access the second network.

S603: The first network element obtains service information of the second network element. A specific implementation may include the following step S604. Optionally, steps S505 and S506 may be performed before step S510, or may be performed after step S510. This is not limited in this application.

S604: The second network element sends the service information to the first network element, and correspondingly, the first network element receives the service information from the second network element.

In this application, the service information includes one or more of the following: information about a list of users and information about a list of user groups for which the second network element supports providing a service, a subnet identifier, open access indication information, and an identifier of a subnet service supported by the second network element. For a specific explanation, refer to related descriptions of the method 500.

S605: The first network element determines, based on the service information and the first request message, whether to allow the terminal device to access the second network.

For specific implementations of steps S602 to S605, refer to related descriptions of steps S510 and S506 to S508 in the method 500. For brevity, details are not described herein again.

S620: The second network element determines the access policy information of the second network based on the first request message and subscription information of the second network.

The access policy information indicates a policy used by the terminal device in the first region to access the second network through the first network.

Optionally, the second network element locally stores the subscription information of the second network.

For example, if the terminal device is currently in a reachable state, the first network element may execute the access policy decision based on the first request message and the subscription information of the second network.

In this application, the subscription information includes subscription information at a user granularity (for example, a user account balance or a package balance) or subscription information at a network granularity. The subscription information includes one or more of the following: a list of accessible services, service assurance subscription information, a service range of the second network, information about a terminal device authorized to access the subnet service, information about the subnet service, network information corresponding to the subnet service, or subscription usage quota information of the subnet service. For a specific explanation, refer to related descriptions of the method 500.

Optionally, a specific implementation of step S620 may include the following steps S606 and S607. For a specific implementation, refer to related descriptions of step S520 in the method 500.

S606: The second network element obtains second resource indication information, where the second resource indication information indicates a resource that the first network authorizes the terminal device to use. For example, that the second network element obtains the second resource indication information includes: For example, if the first network includes a network element configured to store a resource that is in the first network and that is used by the terminal device, for example, a PCF or a UDM, the second network element may directly or indirectly obtain the second resource indication information from the PCF or the UDM.

S607: The second network element determines the access policy information of the second network based on the first request message, the subscription information of the second network, and the second resource indication information, where the access policy information of the second network includes first resource indication information, and the first resource indication information indicates a resource that is in the first network and that is used by the terminal device to access the second network through the first network. For example, the second resource indication information indicates that the first network authorizes the terminal device to access the second network by using S-NSSAI #1 and S-NSSAI #2 provided by the first network, and the first resource indication information indicates that after executing the policy decision, the first network element determines to authorize the terminal device to access the second network by using the S-NSSAI #2.

In this application, the resource that the first network authorizes the terminal device to use may include a resource at a user granularity or a resource at a subnet granularity, for example, information such as a bandwidth, remaining traffic, a DNN and/or an S-NSSAI list that the terminal device is authorized to use. For a specific explanation, refer to related descriptions of the method 500.

S630: The second network element sends the access policy information of the second network to the control plane network element, and correspondingly, the control plane network element receives the access policy information from the second network element. For a specific implementation, refer to the implementation of the first network element in step S530 of the method 500.

According to the solution provided in this application, the second network element makes the access policy decision based on the received first request message and the subscription information of the second network, and may obtain the access policy information of the second network, that is, a policy decision result. Based on the policy decision result, the control plane network element (for example, an AMF) may complete registration of the terminal device based on the access policy information, so that the terminal device accesses the second network or a service in the second network. Alternatively, the control plane network element (for example, an SMF) may establish a session, for example, a PDU session, for the terminal device based on the access policy information, and perform transmission of the subnet service based on the PDU session, so that the terminal device can access the second network through the first network, and obtain the service provided by the second network.

FIG. 7 is a schematic flowchart of a communication method 700 according to an embodiment of this application. FIG. 7 is mainly applicable to the network architecture shown in FIG. 1 or FIG. 2. For example, a second network element is a subnet data node (subnet DB), a first network element is a region data node (region DB), a subnet user is UE, and a control plane network element is a CP NF. In this implementation, based on introduction of the region data node region DB, the subnet data node DB is supported to be connected to the region data node DB, to support a subnet data node DB self-organization/operations and maintenance scenario. The method includes the following plurality of steps. For a part that is not described in detail, refer to an existing protocol.

It should be understood that, the method 700 shown in FIG. 7 may be considered as a specific implementation of the method shown in FIG. 5 or FIG. 6. Related descriptions in the embodiment shown in FIG. 5 or FIG. 6 are also applicable to this implementation. A same or similar technical means may exist between FIG. 7 and FIG. 5 and FIG. 6. Content in FIG. 7 that has been described in the embodiments shown in FIG. 5 and FIG. 6 is not described again.

S701: The subnet DB sends service information to the region DB, and correspondingly, the region DB receives the service information from the subnet DB.

S702: The subnet DB sends the service information to a home DB, and correspondingly, the home DB receives the service information from the subnet DB.

The service information includes one or more of the following: a list of users and a list of groups for which the subnet DB provides a service, a subnet identifier, and a service identifier. For a specific explanation, refer to related descriptions of the method 500.

Optionally, either step S701 or step S702 may be performed. This is not limited in this application.

S703: The UE initiates a user access request (that is, the first request message in the method 500 or the second request message in the method 600) to a network side.

For example, the UE sends an access request message to the region DB, and correspondingly, the region DB receives the access request message from the UE.

It should be understood that, if the region DB is not a home DB of the current user, the region DB may further interact with the home DB, to obtain a home service policy/subscription information, to execute a local service decision. For example, the CP NF accesses the region DB, and the region DB addresses the home DB to obtain the home service policy/subscription information. Optionally, service authorization information is further included. Further, the region DB performs local service policy decision authorization based on inputs such as a user subscription and a local service subscription, and the region DB/CP NF executes a UE access procedure based on a policy decision result.

Optionally, the access request message may include one or more of the following: a subnet identifier, a subnet user identifier, or subnet service indication information. For a specific explanation, refer to related descriptions of the method 500.

S704: The region DB executes a subnet service access decision.

For example, the region DB executes, based on user data in step S703 and subnet data in step S701, the subnet service access decision, to determine whether to guide the UE to access a subnet service. For specific determining logic, refer to related descriptions of the method 500.

Optionally, if step S701 is not performed, and step S702 is performed, in step S704, the region DB needs to interact with the home DB, to obtain the subnet data, so as to execute the subnet service access decision. It should be understood that, based on the access decision in step S704, when the region DB determines that the UE can access a subnet, a subsequent subnet access policy decision procedure used for the UE is triggered.

With reference to Manner 1 or Manner 2, the following describes how the subnet DB or the region DB executes the subnet access policy decision. Manner 1 includes steps S705 to S709. The subnet DB mainly executes a closed-loop decision, that is, the region DB triggers a redirection procedure, so that a CP NF on a large network side initiates a service/policy association establishment request to the subnet DB, and the subnet DB executes a local service decision. Manner 2 includes steps S710 to S714. The region DB mainly executes a closed-loop decision, that is, the region DB interacts with the subnet DB based on the service information of the subnet, to obtain an access policy/a service policy corresponding to the subnet, and the like.

### Manner 1:

S705: The region DB sends redirection indication information to the CP NF on the large network side, and correspondingly, the CP NF receives the redirection indication information from the region DB.

The redirection indication information includes a subnet DB identifier or the subnet identifier, that is, the CP NF may perform the redirection procedure based on the subnet identifier or the subnet DB identifier.

S706: The CP NF sends the service/policy association establishment request (that is, the first request message in the method 600) to the subnet DB, and correspondingly, the subnet DB receives the service/policy association establishment request from the CP NF.

The service/policy association establishment request includes one or more of the following: an identifier of the UE, a location of the UE, or information about a network that the UE requests to access, for example, a DNN or S-NSSAI. For a specific explanation, refer to related descriptions of the method 500.

Optionally, the service/policy association establishment request may alternatively be initiated by a CP NF on a subnet side. This is not limited in this application.

S707: The subnet DB executes the subnet access policy decision, to obtain the policy decision result (that is, an example of policy decision information).

For example, the subnet DB executes the subnet access policy decision based on the service/policy association establishment request and subnet subscription information. For a specific implementation, refer to related descriptions of step S620 in the method 600. For definitions of parameters included in the subnet subscription information and the policy decision result, refer to related descriptions of the method 500.

S708: Optionally, execute a service policy association request/response.

For example, the subnet DB may further directly or indirectly obtain policy information authorized by a large network, for example, resource information (information such as a bandwidth and remaining traffic) authorized for use, so that the subnet DB executes a subnet access policy control decision based on the service/policy association establishment request, the subnet subscription information, and the resource information. For details, refer to related descriptions of step S620 in the method 600.

S709: The subnet DB sends the policy decision result to the CP NF/UE, and correspondingly, the CP NF/UE receives the policy decision result from the subnet DB. For a specific implementation, refer to related descriptions of step S630 in the method 600.

### Manner 2:

S710: The region DB sends a subnet subscription information request (that is, the second request message in the method 500) to the subnet DB, and correspondingly, the subnet DB receives the subnet subscription information request from the region DB.

S711: The subnet DB sends subnet subscription information to the region DB, and correspondingly, the region DB receives the subnet subscription information from the subnet DB.

S712: The region DB executes the subnet access policy decision, to obtain the policy decision result.

For example, the region DB executes the subnet access policy decision based on the user access request in step S703 and the subnet subscription information in step S711. For a specific implementation, refer to related descriptions of step S520 in the method 500. For definitions of parameters included in the subnet subscription information and the policy decision result, refer to related descriptions of the method 500.

In other words, the policy decision result may be generated based on a service identifier and a subnet identifier that are requested by the UE, policy information at a user granularity and/or a subnet granularity, and subscription information at the user granularity provided by the home DB. For example, the subnet access policy may include policy information for the subnet to access a specific service, for example, a specific DNN or specific S-NSSAI that needs to be used to access the service, service assurance policy information (information such as a bandwidth, a scheduling priority, and a delay), or information about a list of services authorized to be accessed.

S713: Optionally, execute a service policy association request/response.

For example, the region DB may further directly or indirectly obtain policy information authorized by a large network, for example, resource information (information such as a bandwidth and remaining traffic) authorized for use, so that the subnet DB executes a subnet access policy control decision based on the service/policy association establishment request, the subnet subscription information, and the resource information. For details, refer to related descriptions of step S620 in the method 600.

S714: The region DB sends the policy decision result to the CP NF/UE, and correspondingly, the CP NF/UE receives the policy decision result from the region DB.

Further, the CP NF may complete registration of the UE based on the policy decision result, so that the UE accesses the large network. Alternatively, the CP NF may establish a session, for example, a PDU session, for the UE based on the policy decision result, and perform transmission of the service based on the PDU session.

It should be noted that, the foregoing uses an example in which the subnet DB sends the service information to the region DB or the home DB. Optionally, the subnet DB may alternatively send the service information of the subnet DB to the large network NRF, and a subnet ID field is added to subnet user subscription information. When accessing the network via the region DB, the UE may obtain subnet information corresponding to the UE via the home DB, and then establish a communication connection to the subnet DB via the NRF. For a specific implementation, refer to the foregoing related descriptions. For brevity, details are not described herein again.

According to the solution provided in this application, the region DB or the subnet DB executes the access policy decision for the UE to access the subnet, to obtain the policy decision result. Based on the policy decision result, the CP NF on the large network side (for example, an AMF) may complete registration of the terminal device based on the policy decision result, so that the terminal device accesses a second network or a service in the second network. Alternatively, the CP NF on the large network side (for example, an SMF) may establish a session, for example, a PDU session, for the terminal device based on the policy decision result, and perform transmission of the subnet service based on the PDU session, so that the UE can access the subnet through the large network, and obtain the subnet service provided by the subnet, to ensure user experience of the UE.

To support providing a multi-operator interconnection capability for the subnet, and reduce complexity of interconnection with a plurality of operators in a deployment process of the subnet, this application provides the communication method shown in FIG. 6 based on the network architecture shown in FIG. 3. To be specific, based on introduction of a cross-network DB, a scenario in which the region DB is indirectly interconnected with the subnet DB via the cross-network DB is supported.

FIG. 8 is a schematic flowchart of a communication method 800 according to an embodiment of this application. FIG. 8 is mainly applicable to the network architecture shown in FIG. 3. For example, a second network element is a subnet data node (subnet DB), a first network element is a region data node (region DB), a third network element is a cross-network data node (cross-network DB), a subnet user is UE, and a control plane network element is a CP NF. The method includes the following plurality of steps. For a part that is not described in detail, refer to an existing protocol.

It should be understood that, the method 800 shown in FIG. 8 may be considered as a specific implementation of the method shown in FIG. 5 or FIG. 6. Related descriptions in the embodiment shown in FIG. 5 or FIG. 6 are also applicable to this implementation. A same or similar technical means may exist between FIG. 8 and FIG. 5 and FIG. 6. Content in FIG. 8 that has been described in the embodiments shown in FIG. 5 and FIG. 6 is not described again.

S801: The subnet DB sends service information to the cross-network DB, and correspondingly, the cross-network DB receives the service information from the subnet DB.

S802: The cross-network DB sends the service information to the region DB, and correspondingly, the region DB receives the service information from the subnet DB.

S803: The cross-network DB sends the service information to a home DB, and correspondingly, the home DB receives the service information from the cross-network DB.

The service information may include information such as a list of users and a list of groups for which the subnet DB provides a service, a subnet identifier, or a service access policy. For a specific explanation, refer to related descriptions of the method 500.

Optionally, either step S802 or step S803 may be performed. For example, if only intra-region access is supported, the cross-network DB may initiate a service synchronization procedure only to the region DB, that is, perform step S802. If wide area access is supported, the cross-network DB needs to initiate a service synchronization procedure to the home DB, that is, perform step S803.

S804: The UE initiates a user access request (that is, the first request message in the method 500 or the second request message in the method 600) to a network side.

S805: The region DB executes a subnet service access decision.

For specific implementations of steps S804 and S805, refer to related descriptions of steps S703 and S704 in the method 700.

With reference to Manner 1 or Manner 2, the following describes how the subnet DB or the region DB executes a subnet access policy decision. Manner 1 includes steps S806 to S809. The subnet DB mainly executes a closed-loop decision, that is, the region DB triggers a redirection procedure, so that a CP NF on a large network side initiates a service/policy association establishment request to the subnet DB, and the subnet DB executes a local service decision. This process involves performing a subnet or subnet DB topology query procedure with the cross-network DB. Manner 2 includes steps S810 to S814. The region DB mainly executes a closed-loop decision, that is, the region DB interacts with the subnet DB based on the service information of the subnet, to obtain an access policy/a service policy that is applicable outside a subnet range.

### Manner 1:

S806: The region DB sends redirection indication information to the CP NF, and correspondingly, the CP NF receives the redirection indication information from the region DB.

The redirection indication information may carry the subnet identifier, and optionally, may further carry cross-network DB address information. It should be understood that, a specific form of the cross-network data node may be a cross-operator service registration network element (similar to an NRF in a 5G network), or may be a cross-operator topology management node (similar to OAM in an operator network). This is not limited in this application.

S807: The CP NF triggers topology query.

For example, the CP NF sends a topology query request message to the cross-network DB, and correspondingly, the cross-network DB receives the topology query request message from the CP NF, where the request message carries the subnet identifier or a subnet DB identifier, to search for routing information of the subnet or the subnet DB. Correspondingly, the cross-network DB sends the routing information of the subnet or the subnet DB to the CP NF.

The subnet routing information may be device routing information of a control plane or a data plane, a list of provided services, or the like of the subnet. The device routing information may include information such as an IP address, an FQDN, and a host name of the second network element. This is not limited in this application.

Optionally, the subnet routing information may be carried in the service information in step S802.

S808: The CP NF sends a subnet service/policy association establishment request (that is, the first request message in the method 600) to the subnet DB, and correspondingly, the subnet DB receives the subnet service/policy association establishment request from the CP NF.

For example, the CP NF may directly or indirectly initiate the subnet service/policy association establishment request to the subnet DB based on a query result, to obtain subnet service access policy information. For a parameter included in the service/policy association establishment request and a definition thereof, refer to related descriptions of the method 500.

S809: The subnet DB executes the subnet access policy decision, to obtain a policy decision result (that is, an example of policy decision information).

For example, the subnet DB executes the subnet access policy decision based on the service/policy association establishment request and subnet subscription information. For a specific implementation, refer to related descriptions of step S707 in the method 700. For definitions of parameters included in the subnet subscription information and the policy decision result, refer to related descriptions of the method 500.

### Manner 2:

S810: The region DB sends a request message #1 to the cross-network DB, and correspondingly, the cross-network DB receives the request message #1 from the region DB.

The request message #1 includes the subnet identifier, and is used to request to obtain subnet routing information. For example, the region DB initiates a subnet routing information query request to the cross-network DB based on the subnet identifier.

S811: The cross-network DB sends the subnet routing information to the region DB, and correspondingly, the region DB receives the subnet routing information from the cross-network DB. For a specific definition of the subnet routing information, refer to related descriptions of the method 500.

S812: The region DB sends a request message #2 (that is, the second request message) to the subnet DB, and correspondingly, the subnet DB receives the request message #2 from the region DB.

The request message #2 is used to request to obtain subnet subscription information. For example, the request message #2 includes the subnet identifier and/or an identifier of the UE.

S813: The subnet DB sends the subnet subscription information to the region DB, and correspondingly, the region DB receives the subnet subscription information from the subnet DB. For a specific definition of the subnet subscription information, refer to related descriptions of the method 500.

S814: The region DB executes the subnet access policy decision, to obtain a policy decision result.

For example, the region DB executes the subnet access policy decision based on the user access request in step S604 and the subnet subscription information in step S813. For a specific implementation, refer to related descriptions of step S712 in the method 700. For definitions of parameters included in the subnet subscription information and the policy decision result, refer to related descriptions of the method 500.

S815: Execute the service policy.

For example, the subnet DB in Manner 1 or the region DB in Manner 2 sends the obtained policy decision result to the CP NF/UE, to implement access control of the subnet. For a specific implementation, refer to related descriptions of step S709 or S714 in the method 700.

According to the solution provided in this application, the region DB or the subnet DB executes the access policy decision for the UE to access the subnet, to obtain the policy decision result. Based on the policy decision result, the CP NF on the large network side (for example, an AMF) may complete registration of the terminal device based on the policy decision result, so that the terminal device accesses a second network or a service in the second network. Alternatively, the CP NF on the large network side (for example, an SMF) may establish a session, for example, a PDU session, for the terminal device based on the policy decision result, and perform transmission of the subnet service based on the PDU session, so that the UE can access the subnet through the large network, and obtain the subnet service provided by the subnet, to ensure user experience of the UE.

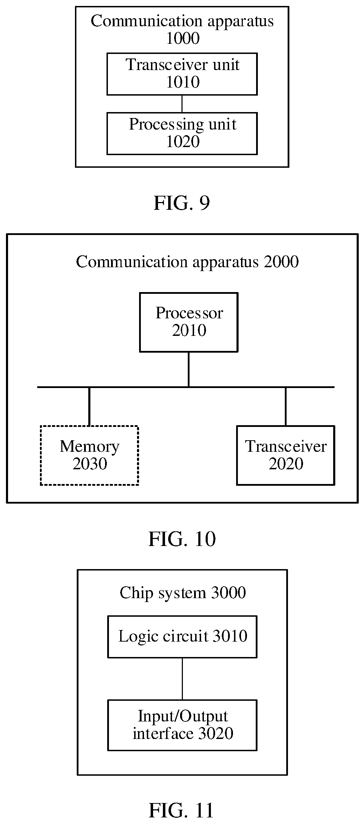

The foregoing describes in detail embodiments on a communication method side in this application with reference to FIG. 1 to FIG. 8. The following describes in detail embodiments on a communication apparatus side in this application with reference to FIG. 9 to FIG. 11. It should be understood that, descriptions of the apparatus embodiments correspond to the descriptions of the method embodiments. Therefore, for a part that is not described in detail, refer to the foregoing method embodiments.

FIG. 9 is a diagram of a structure of a communication apparatus 1000 according to an embodiment of this application. As shown in FIG. 9, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement steps or procedures performed by the first network element in the foregoing method embodiments. The processing unit 1020 is configured to perform a processing-related operation of the first network element in the foregoing method embodiments, and the transceiver unit 1010 is configured to perform a receiving/sending-related operation of the first network element in the foregoing method embodiments.

For example, the transceiver unit 1010 is configured to receive a first request message from a terminal device, where the first request message is used to request to access a second network. The processing unit 1020 is configured to determine access policy information of the second network based on the first request message and subscription information of the second network, where the access policy information indicates a policy used by the terminal device to access, in a first region, the second network through the first network, and the first network and the second network support providing a service for a terminal device in the first region. The transceiver unit 1010 is further configured to send the access policy information to a control plane network element in the first network.

In another possible design, the apparatus 1000 may implement steps or procedures performed by the second network element in the foregoing method embodiments. The transceiver unit 1010 is configured to perform a receiving/sending-related operation of the second network element in the foregoing method embodiments, and the processing unit 1020 is configured to perform a processing-related operation of the second network element in the foregoing method embodiments.

For example, the transceiver unit 1010 is configured to receive a request message from a first network element in a first network, where the request message is used to request to obtain subscription information of a second network, the first network and the second network support providing a service for a terminal device in a first region, and the first region is a region in which the terminal device requests to access the second network through the first network. The transceiver unit 1010 is further configured to send the subscription information to the first network element based on the request message.

In a possible design, the apparatus 1000 may implement steps or procedures performed by the second network element in the foregoing method embodiments. The transceiver unit 1010 is configured to perform a receiving/sending-related operation of the second network element in the foregoing method embodiments, and the processing unit 1020 is configured to perform a processing-related operation of the second network element in the foregoing method embodiments.

For example, the transceiver unit 1010 is configured to receive a request message from a control plane network element in a first network, where the request message is used to request to obtain access policy information of a second network, or is used to request to enable a terminal device to access the second network, the access policy information indicates a policy used by the terminal device to access, in a first region, the second network through the first network, and the first network and the second network support providing a service for a terminal device in the first region. The processing unit 1020 is configured to determine the access policy information of the second network based on the request message and subscription information of the second network. The transceiver unit 1010 is further configured to send the access policy information of the second network to the control plane network element.

In another possible design, the apparatus 1000 may implement steps or procedures performed by the first network element in the foregoing method embodiments. The transceiver unit 1010 is configured to perform a receiving/sending-related operation of the first network element in the foregoing method embodiments, and the processing unit 1020 is configured to perform a processing-related operation of the first network element in the foregoing method embodiments.

For example, the transceiver unit 1010 is configured to obtain service information of a second network element in a second network, where the service information indicates a service supported by the second network element, and a first network and the second network support providing a service for a terminal device in a first region. The transceiver unit 1010 is further configured to receive, from the terminal device, a message used to request to access the second network. The processing unit 1020 is configured to determine, based on the message used to request to access the second network and the service information, to allow the terminal device to access the second network. The transceiver unit 1010 is further configured to send, to a control plane network element in the first network, a message indicating the control plane network element to establish a communication connection to the second network element.

It should be understood that, the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component supporting the described function. In an optional example, a person skilled in the art may understand that the apparatus 1000 may be specifically the first network element in the foregoing embodiments, and may be configured to perform procedures and/or steps corresponding to the first network element in the foregoing method embodiments. Alternatively, the apparatus 1000 may be specifically the second network element in the foregoing embodiments, and may be configured to perform procedures and/or steps corresponding to the second network element in the foregoing method embodiments. To avoid repetition, details are not described herein again.

The apparatus 1000 in the foregoing solutions has a function of implementing corresponding steps performed by the first network element in the foregoing methods, or the apparatus 1000 in the foregoing solutions has a function of implementing corresponding steps performed by the second network element in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In embodiments of this application, the communication apparatus 1000 may be the first network element or the second network element in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 10 is a diagram of a structure of a communication apparatus 2000 according to an embodiment of this application. As shown in FIG. 10, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through an internal connection path. The memory 2030 is configured to store instructions, and the processor 2010 may execute the instructions stored in the memory 2030.

In a possible implementation, the apparatus 2000 is configured to implement procedures and steps corresponding to the second network element in the foregoing method embodiments.

In another possible implementation, the apparatus 2000 is configured to implement procedures and steps corresponding to the first network element in the foregoing method embodiments.

It should be understood that, the apparatus 2000 may be specifically the first network element or the second network element in the foregoing embodiments, or may be a chip or a chip system. Correspondingly, the transceiver 2020 may be a transceiver circuit of the chip. This is not limited herein. For example, the apparatus 2000 may be configured to perform steps and/or procedures corresponding to the first network element or the second network element in the foregoing method embodiments.

Optionally, the memory 2030 may include a read-only memory and a random access memory, and provide instructions and data for the processor. A part of the memory may further include a non-volatile random access memory. For example, the memory may further store information of a device type. The processor 2010 may be configured to execute the instructions stored in the memory. In addition, when the processor 2010 executes the instructions stored in the memory, the processor 2010 is configured to perform steps and/or procedures corresponding to the first network element or the second network element in the foregoing method embodiments.

In an implementation process, steps in the foregoing methods may be completed by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in a decoding processor and a software module. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of an example but not limitative descriptions, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any memory of another proper type.

FIG. 11 is a diagram of a structure of a chip system 3000 according to an embodiment of this application. As shown in FIG. 11, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the second network element (for example, a subnet data node or a subnet DB) in the foregoing method embodiments.

In a solution, the chip system 3000 is configured to implement operations performed by the first network element (for example, a region data node or a region DB) in the foregoing method embodiments.

In a solution, the chip system 3000 is configured to implement operations performed by the control plane network element (for example, a CP NF) in the foregoing method embodiments.

In a solution, the chip system 3000 is configured to implement operations performed by the terminal device (for example, UE) in the foregoing method embodiments.

An embodiment of this application further provides a computer-readable storage medium. The computer-readable storage medium stores computer instructions used to implement the method performed by the device in the foregoing method embodiments.

An embodiment of this application further provides a computer program product, including instructions. When the instructions are executed by a computer, the method performed by the device in the foregoing method embodiments is implemented.

An embodiment of this application further provides a communication system, including, for example, the second network element and the first network element.

Optionally, the communication system further includes the control plane network element and/or the terminal device. The control plane network element may be a control plane network element in the first network.

For explanations and beneficial effects of related content in any communication apparatus provided above, refer to the foregoing corresponding method embodiments. Details are not described herein again.

For ease of understanding of the foregoing embodiments provided in this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between the associated objects. "At least one of the following items (pieces)" or a similar expression thereof means any combination of these items, including a single item (piece) or any combination of plural items (pieces). For example, at least one item (piece) of a, b, and c may represent a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are intended to distinguish between different messages but not to describe a specific order or sequence. It should be understood that, objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case, and do not limit time, and the device is not required to perform a determining action during implementation. This does not mean that there is another limitation.
(5) In this application, "indicate" may include "directly indicate" and "indirectly indicate". When a piece of indication information indicates A, the indication information may directly indicate A or indirectly indicate A, but it does not mean that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. An example sending method is not limited in embodiments of this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefinition" may include definition in advance, for example, definition in a protocol. "Pre-configuration" may be implemented by pre-storing corresponding code or a corresponding table in a device, or may be implemented in another manner that may indicate related information. A specific implementation thereof is not limited in this application.

(7) In this application, "communication" may also be described as "data transmission", "information transmission", "data processing", or the like. "Transmission" includes "sending" and "receiving".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, to be specific, may be located in one place, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network element, wherein the first network element is a network element in a first network, and the method comprises:
receiving a first request message from a terminal device, wherein the first request message is used to request to access a second network;
determining access policy information of the second network based on the first request message and subscription information of the second network, wherein the access policy information indicates a policy used by the terminal device to access, in a first region, the second network through the first network, and the first network and the second network support providing a service for a terminal device in the first region; and
sending the access policy information to a control plane network element in the first network.

2. The method according to claim 1, wherein before the determining the access policy information of the second network based on the first request message and the subscription information of the second network, the method further comprises:
obtaining the subscription information of the second network.

3. The method according to claim 2, wherein the obtaining the subscription information of the second network comprises:
sending a second request message to a second network element in the second network, wherein the second request message is used to request to obtain the subscription information of the second network; and
receiving the subscription information from the second network element.

4. The method according to claim 3, wherein before the sending the second request message to the second network element in the second network, the method further comprises:
obtaining routing information of the second network element; and
the sending the second request message to the second network element in the second network comprises:
sending the second request message to the second network element in the second network based on the routing information of the second network element.

5. The method according to claim 4, wherein the obtaining the routing information of the second network element comprises:
sending a third request message to a third network element, wherein the third request message is used to request to obtain the routing information of the second network element, and the third network element is configured to support information exchange between a network element in the first network and a network element in the second network; and
receiving the routing information of the second network element from the third network element.

6. The method according to any one of claims 1 to 5, wherein the access policy information of the second network comprises first resource indication information, the first resource indication information indicates a resource that is in the first network and that is used by the terminal device to access the second network through the first network, and the method further comprises:
obtaining second resource indication information, wherein the second resource indication information indicates a resource that the first network authorizes the terminal device to use; and
determining the first resource indication information based on the second resource indication information.

7. The method according to any one of claims 3 to 6, wherein before the sending the second request message to the second network element in the second network, the method further comprises:
obtaining service information of the second network element, wherein the service information indicates a service supported by the second network element; and
determining, based on the service information and the first request message, to allow the terminal device to access the second network.

8. The method according to claim 7, wherein the obtaining the service information of the second network element comprises:
receiving the service information of the second network element from the second network element;
receiving the service information of the second network element from a home network element, wherein the home network element is a network element in a home network of the terminal device; or
receiving the service information of the second network element from a third network element, wherein the third network element is configured to support information exchange between a network element in the first network and a network element in the second network.

9. The method according to claim 7 or 8, wherein the determining, based on the service information and the first request message, to allow the terminal device to access the second network comprises:
when the service information and the first request message meet one or more of the following conditions, determining to allow the terminal device to access the second network:
the first request message comprises information indicating a location of the terminal device, the service information comprises a service range of the second network, and the service range of the second network comprises the location of the terminal device;
the first request message comprises information identifying a first service in the second network, and the service information indicates that the terminal device is allowed to access the first service;
the first request message comprises information identifying the second network, and the service information indicates that the terminal device is allowed to access the second network; or
the service information indicates that the second network allows a terminal device that does not subscribe to the second network to access the second network.

10. A communication method, applied to a second network element, wherein the second network element is a network element in a second network, and the method comprises:
receiving a request message from a control plane network element in a first network, wherein the request message is used to request to obtain access policy information of the second network, the access policy information indicates a policy used by a terminal device to access, in a first region, the second network through the first network, and the first network and the second network support providing a service for a terminal device in the first region;
determining the access policy information of the second network based on the request message and subscription information of the second network; and
sending the access policy information of the second network to the control plane network element.

11. The method according to claim 10, wherein the access policy information of the second network comprises first resource indication information, the first resource indication information indicates a resource that is in the first network and that is used by the terminal device to access the second network through the first network, and the method further comprises:
obtaining second resource indication information, wherein the second resource indication information indicates a resource that the first network authorizes the terminal device to use; and
determining the first resource indication information based on the second resource indication information.

12. The method according to claim 10 or 11, wherein before the receiving the request message from the control plane network element in the first network, the method further comprises:
sending service information of the second network element to a first network element or a home network element, wherein the service information indicates a service supported by the second network element, the first network element is a network element in the first network, and the home network element is a network element in a home network of the terminal device.

13. The method according to claim 12, wherein the sending the service information of the second network element to the first network element or the home network element comprises:
sending the service information of the second network element to the first network element or the home network element via a third network element, wherein the third network element is configured to support information exchange between a network element in the first network and a network element in the second network.

14. A communication method, applied to a first network element, wherein the first network element is a network element in a first network, and the method comprises:
obtaining service information of a second network element in a second network, wherein the service information indicates a service supported by the second network element, and the first network and the second network support providing a service for a terminal device in a first region;
receiving, from the terminal device, a message used to request to access the second network;
determining, based on the message used to request to access the second network and the service information, to allow the terminal device to access the second network; and
sending, to a control plane network element in the first network, a message indicating the control plane network element to establish a communication connection to the second network element.

15. The method according to claim 14, wherein the obtaining the service information of the second network element comprises:
receiving the service information of the second network element from the second network element;
receiving the service information of the second network element from a home network element, wherein the home network element is a network element in a home network of the terminal device; or
receiving the service information of the second network element from a third network element.

16. A communication method, comprising:
receiving, by a first network element, a first request message from a terminal device, wherein the first request message is used to request to access a second network, and the first network element is a network element in a first network;
determining, by the first network element, access policy information of the second network based on the first request message and subscription information of the second network, wherein the access policy information indicates a policy used by the terminal device to access, in a first region, the second network through the first network, and the first network and the second network support providing a service for a terminal device in the first region; and
sending, by the first network element, the access policy information to a control plane network element in the first network, and receiving, by the control plane network element in the first network, the access policy information from the first network element.

17. The method according to claim 16, wherein before the determining the access policy information of the second network based on the first request message and the subscription information of the second network, the method further comprises:
obtaining, by the first network element, the subscription information of the second network.

18. The method according to claim 17, wherein the obtaining, by the first network element, the subscription information of the second network comprises:
sending, by the first network element, a second request message to a second network element in the second network, and receiving, by the second network element, the second request message from the first network element, wherein the second request message is used to request to obtain the subscription information of the second network; and
sending, by the second network element, the subscription information to the first network element based on the second request message, and receiving, by the first network element, the subscription information from the second network element.

19. The method according to any one of claims 16 to 18, wherein before the sending, by the first network element, the second request message to the second network element in the second network, the method further comprises:
obtaining, by the first network element, service information of the second network element, wherein the service information indicates a service supported by the second network element; and
determining, by the first network element based on the service information and the first request message, to allow the terminal device to access the second network.

20. The method according to claim 19, wherein the determining, by the first network element based on the service information and the first request message, to allow the terminal device to access the second network comprises:
when the service information and the first request message meet one or more of the following conditions, determining to allow the terminal device to access the second network:
the first request message comprises information indicating a location of the terminal device, the service information comprises a service range of the second network, and the service range of the second network comprises the location of the terminal device;
the first request message comprises information identifying a first service in the second network, and the service information indicates that the terminal device is allowed to access the first service;
the first request message comprises information identifying the second network, and the service information indicates that the terminal device is allowed to access the second network; or
the service information indicates that the second network allows a terminal device that does not subscribe to the second network to access the second network.

21. A communication method, comprising:
sending, by a control plane network element in a first network, a request message to a second network element in a second network, and receiving, by the second network element, the request message from the control plane network element in the first network, wherein the request message is used to request to obtain access policy information of the second network, the access policy information indicates a policy used by the terminal device to access, in a first region, the second network through the first network, and the first network and the second network support providing a service for a terminal device in the first region;
determining, by the second network element, the access policy information of the second network based on the request message and subscription information of the second network; and
sending, by the second network element, the access policy information of the second network to the control plane network element, and receiving, by the control plane network element, the access policy information of the second network from the second network element.

22. The method according to claim 21, wherein before the sending, by the control plane network element in the first network, the request message to the second network element in the second network, the method further comprises:
obtaining, by the first network element, service information of the second network element, wherein the service information indicates a service supported by the second network element, and the first network and the second network support providing a service for a terminal device in the first region;
receiving, by the first network element from the terminal device, a message used to request to access the second network;
determining, by the first network element based on the message used to request to access the second network and the service information, to allow the terminal device to access the second network; and
sending, by the first network element to the control plane network element in the first network, a message indicating the control plane network element to establish a communication connection to the second network element, and receiving, by the control plane network element in the first network from the first network element, the message indicating the control plane network element to establish the communication connection to the second network element.

23. A communication apparatus, comprising one or more functional modules, wherein the one or more functional modules are configured to perform the method according to any one of claims 1 to 9, the one or more functional modules are configured to perform the method according to any one of claims 10 to 13, or the one or more functional modules are configured to perform the method according to claim 14 or 15.

24. A communication apparatus, comprising a processor, wherein the processor is coupled to a memory; and the processor is configured to execute a computer program stored in the memory, to enable the apparatus to perform the method according to any one of claims 1 to 9, enable the apparatus to perform the method according to any one of claims 10 to 13, or enable the apparatus to perform the method according to claim 14 or 15.

25. A communication system, comprising a first network element and a control plane network element, wherein the first network element is configured to perform any one of claims 1 to 9, and the control plane network element is configured to receive access policy information from the first network element.

26. A communication system, comprising a first network element and a second network element, wherein the first network element is configured to perform the method according to claim 14 or 15, and the second network element is configured to perform the method according to any one of claims 10 to 13.

27. A computer-readable storage medium, comprising: the computer-readable storage medium stores a computer program, and when the computer program is run on a computer, the computer is enabled to perform the method according to any one of claims 1 to 9, the computer is enabled to perform the method according to any one of claims 10 to 13, or the computer is enabled to perform the method according to claim 14 or 15.

28. A computer program product, wherein when being executed by a communication apparatus, the computer program product implements the method according to any one of claims 1 to 9, implements the method according to any one of claims 10 to 13, or implements the method according to claim 14 or 15.
